# EUROPEAN PATENT APPLICATION

(11) **EP 4 509 841 A1**
(43) Date of publication of application: **19.02.2025**
(21) Application number: 23788053.9
(22) Date of filing: 01.03.2023
(51) Int. Cl.: G01N 35/08, B01J 19/00, B81B 1/00, B81C 1/00, G01N 37/00

(54) **MICROFLUIDIC CHIP AND METHOD FOR MANUFACTURING MICROFLUIDIC CHIP**

(30) Priority: 15.04.2022 JP 2022067518
(71) Applicant: Toppan Holdings Inc., Tokyo 110-0016 (JP)
(72) Inventor: HAKII, Hidemitsu, Tokyo 110-0016 (JP); FUKUGAMI, Norihito, Tokyo 110-0016 (JP); MURATA, Koudai, Tokyo 110-0016 (JP)
(74) Representative: Plasseraud IP
(86) International application number: PCT/JP2023/007527
(87) International publication number: WO 2023/199631

(57) **Abstract**

An object of the present invention is to provide a microfluidic chip and a method for manufacturing a microfluidic chip each of which makes it possible to prevent backflow of a reaction solution in a microfluidic chip and prevent contamination between reaction solutions. One of typical microfluidic chips according to the present invention includes: an input section from which a liquid is introduced; a channel section in which the liquid flows; and an output section from which the liquid is discharged or a drug fixation section (uniformly referred to as an "output section" below) where the liquid and a drug come into contact. The microfluidic chip is characterized in that the channel section has a region (hydrophobic region) in which a contact angle of a surface in contact with the liquid is 90 degrees or more and 130 degrees or less. The channel section is formed by being surrounded by at least a floor layer, a barrier layer, and an upper covering layer above a substrate, and a surface of at least one of the floor layer, the barrier layer, and the upper covering layer has the hydrophobic region.

## Description

### Technical Field

The present invention relates to a microfluidic chip and a method for a manufacturing microfluidic chip.

### Background Art

In recent years, technology has been proposed that forms fine reaction fields by applying lithography processing or thick film processing technology and allows a minute amount of liquid or the like to be tested in units of several microliters to several nanoliters. Such technology that uses fine reaction fields is referred to as µ-TAS (Micro Total Analysis system).

µ-TAS is applied to fields such as genetic testing, chromosome testing, cell testing, and medicament development, biotechnology, testing for minute quantities of substances in the environment, inspection of the breeding environment of agricultural crops or the like, genetic testing of agricultural crops, and the like. The introduction of the µ-TAS technology offers great effects such as automation, acceleration, higher accuracy, lower cost, speed, and reduced environmental impacts.

In µ-TAS, reactions, observations, and the like are made by using micrometer-sized channels (microfluidic channels or microchannels) formed on substrates in many cases. Such devices are each referred to as a microfluidic chip or the like.

Conventionally, such microfluidic chips have been fabricated by using technology such as injection molding, molding, cutting, and etching. In addition, glass substrates have been chiefly used as substrates of microfluidic chips because the glass substrates are easy to manufacture and also allow for optical detection. Meanwhile, microfluidic chips including light and inexpensive resin materials less prone to breakage than glass substrates also have been under development. Methods for manufacturing microfluidic chips including resin materials include a method for fabricating a microfluidic chip by forming a resin pattern for a channel chiefly by photolithography and bonding a covering member to the resin pattern. This method makes it possible to form even a fine channel pattern that is difficult to form by the conventional technology in some cases.

In addition, a microfluidic chip allows a sensitivity assessment to be carried out in which different types of drugs are fixed in advance in different places in a channel, a test liquid is introduced from an inlet of the channel, and the test liquid and the drugs are reacted. It is advantageous that it is possible to collectively assess the reactions between the test liquid and the plurality of drugs at one time. Meanwhile, it is important for such a microfluidic chip to prevent contamination between the respective reaction solutions. This is because, once the respective reaction solutions mix, it is no longer possible to carry out an accurate assessment. A method has been disclosed that defines the shape of a buffer to prevent contamination between a plurality of chambers. For example, PTL 1 discloses that, in a device for handling a fluid in which a plurality of trapezoid-shaped buffers connected to chambers are connected through channels, contamination between the chambers is suppressed by setting greater length for the bottom side of each of the trapezoids than the length of a side.

### Citation List

### Patent Literature

PTL 1: JP 2021-156780 A

### Summary of the Invention

### Technical Problem

However, for example, in a case where a channel includes a hydrophilic material, the conventional technology having a shape definition may undergo backflow of a reaction solution. In addition, a structure in which a buffer and a chamber are joined by a narrow channel is prone to a backflow of a reaction solution due to a capillary phenomenon. In addition, a portion having a changed shape in the channel is prone to have local air bubbles. An air bubble may cause backflow of reaction solution.

As a result of intensive studies, the inventors of the present application have found that a channel chip provided with a hydrophobic region and a hydrophilic region using material included in a channel makes it possible to stably prevent contamination between reaction solutions.

Accordingly, an object of the present invention is to provide a microfluidic chip and a method for manufacturing a microfluidic chip each of which makes it possible to prevent backflow of reaction solution in a microfluidic chip and prevent contamination between reaction solutions. Solution to Problem

To solve the problem described above, one of typical microfluidic chips according to the present invention includes: an input section from which a fluid is introduced; a channel section in which the fluid flows; and an output section from which the fluid is discharged or a drug fixation section (uniformly referred to as an "output section" below) where the fluid and a drug come into contact. The microfluidic chip is characterized in that the channel section has a region (referred to as a "hydrophobic region" below) in which a contact angle of a surface in contact with the fluid is 90 degrees or more and 130 degrees or less.

### Advantageous Effects of the Invention

According to the present invention, it is possible to provide a microfluidic chip that makes it possible to prevent backflow of reactant in a microfluidic chip and prevent contamination between reaction solutions.

### Brief Description of the Drawings

[Fig. 1A] Fig. 1A is a plan view of an overview of a microfluidic chip according to a first embodiment.
[Fig. 1B] Fig. 1B is a diagram illustrating a cross section of the microfluidic chip taken along a line A-A illustrated in Fig. 1A.
[Fig. 1C] Fig. 1C is a diagram illustrating a cross section of the microfluidic chip taken along a line B-B illustrated in Fig. 1A.
[Fig. 1D] Fig. 1D is a diagram illustrating a cross section of the microfluidic chip taken along a line C-C illustrated in Fig. 1A.
[Fig. 2] Fig. 2 is a flowchart illustrating an example of a method for manufacturing a microfluidic chip according to the first embodiment.
[Fig. 3A] Fig. 3A is a flowchart illustrating a manufacturing method according to Example 1.
[Fig. 3B] Fig. 3B is a cross-sectional view, taken along a line A-A in Fig. 1B, of a microfluidic chip manufactured in Example 1.
[Fig. 3C] Fig. 3C is a cross-sectional view, taken along a line C-C in Fig. 1D, of the microfluidic chip manufactured in Example 1.
[Fig. 4A] Fig. 4A is a flowchart illustrating a manufacturing method according to Example 2.
[Fig. 4B] Fig. 4B is a cross-sectional view, taken along the line A-A in Fig. 1B, of a microfluidic chip manufactured in Example 2.
[Fig. 4C] Fig. 4C is a cross-sectional view, taken along the line C-C of Fig. 1D, of the microfluidic chip manufactured in Example 2.
[Fig. 5A] Fig. 5A is a flowchart illustrating a manufacturing method according to Example 3.
[Fig. 5B] Fig. 5B is a cross-sectional view, taken along the line A-A in Fig. 1B, of a microfluidic chip manufactured in Example 3.
[Fig. 5C] Fig. 5C is a cross-sectional view, taken along the line C-C in Fig. 1D, of the microfluidic chip manufactured in Example 3.
[Fig. 6A] Fig. 6A is a flowchart illustrating a manufacturing method according to Example 4.
[Fig. 6B] Fig. 6B is a cross-sectional view, taken along the line A-A in Fig. 1B, of a microfluidic chip manufactured in Example 4.
[Fig. 6C] Fig. 6C is a cross-sectional view, taken along the line C-C in Fig. 1D, of the microfluidic chip manufactured in Example 4.
[Fig. 7A] Fig. 7A is a flowchart illustrating a manufacturing method according to Example 5.
[Fig. 7B] Fig. 7B is a cross-sectional view, taken along the line A-A of Fig. 1B, of a microfluidic chip manufactured in Example 5.
[Fig. 7C] Fig. 7C is a cross-sectional view, taken along the line C-C of Fig. 1D, of the microfluidic chip manufactured in Example 5.
[Fig. 8A] Fig. 8A is a flowchart illustrating a manufacturing method according to Example 6.
[Fig. 8B] Fig. 8B is a cross-sectional view, taken along the line A-A of Fig. 1B, of a microfluidic chip manufactured in Example 6.
[Fig. 8C] Fig. 8C is a cross-sectional view, taken along the line C-C in Fig. 1D, of the microfluidic chip manufactured in Example 6.
[Fig. 9A] Fig. 9A is a flowchart illustrating a manufacturing method according to Example 7.
[Fig. 9B] Fig. 9B is a cross-sectional view, taken along the line A-A in Fig. 1B, of a microfluidic chip manufactured in Example 7.
[Fig. 9C] Fig. 9C is a cross-sectional view, taken along the line C-C in Fig. 1D, of the microfluidic chip manufactured in Example 7.
[Fig. 10A] Fig. 10A is a flowchart illustrating a manufacturing method according to Example 8.
[Fig. 10B] Fig. 10B is a cross-sectional view, taken along the line A-A of Fig. 1B, of a microfluidic chip manufactured in Example 8.
[Fig. 10C] Fig. 10C is a cross-sectional view, taken along the line C-C in Fig. 1D, of the microfluidic chip manufactured in Example 8.
[Fig. 11A] Fig. 11A is a flowchart illustrating a manufacturing method according to Example 9.
[Fig. 11B] Fig. 11B is a cross-sectional view, taken along the line A-A in Fig. 1B, of a microfluidic chip manufactured in Example 9.
[Fig. 11C] Fig. 11C is a cross-sectional view, taken along the line C-C in Fig. 1D, of the microfluidic chip manufactured in Example 9.
[Fig. 12A] Fig. 12A is a flowchart illustrating a manufacturing method according to a comparative example 1p.
[Fig. 12B] Fig. 12B is a cross-sectional view, taken along the line A-A in Fig. 1B, of a microfluidic chip manufactured in comparative example 1.
[Fig. 12C] Fig. 12C is a cross-sectional view, taken along the line C-C in Fig. 1D, of the microfluidic chip manufactured in comparative example 1.
[Fig. 13] Fig. 13 is a cross-sectional view, taken along the line C-C in Fig. 1D, of a microfluidic chip according to a second embodiment.
[Fig. 14] Fig. 14 is a cross-sectional view, taken along the line C-C in Fig. 1D, of a microfluidic chip according to a modification example of the second embodiment.

### Description of the Embodiments

As a result of intensive studies, the inventors of the present application have found that a hydrophobic region provided in a channel in a microfluidic chip makes it possible to control the movement of droplets and prevent contamination between reaction solutions in the channel. It is possible to form the hydrophobic region by patterning a photosensitive resin and this is an extremely simple method. The inventors of the present application have hereby devised a microfluidic chip and a method for manufacturing a microfluidic chip each of which makes it possible to prevent contamination between reaction solutions in a microfluidic chip.

Modes of the respective embodiments of the present invention will be described below with reference to the drawings.

The following embodiments do not limit the invention according to the claims. In addition, all the combinations of features described in the embodiments are not necessarily essential for the solution means of the invention.

In the drawings, the same portion is denoted by the same reference sign. In a case where a plurality of components have the same or similar functions, different letters may be appended to the same reference sign for description. In addition, in a case where it is not necessary to distinguish the plurality of these components, description is given with no letters in some cases.

To facilitate the understanding of the invention, the position, size, shape, area, and the like of each of the components illustrated in the drawings may not represent the actual position, size, shape, area, and the like. Therefore, the present invention is not necessarily limited to the position, the size, the shape, the area, and the like disclosed in each of the drawings.

### [First Embodiment]

### <Basic Configuration of Microfluidic Chip>

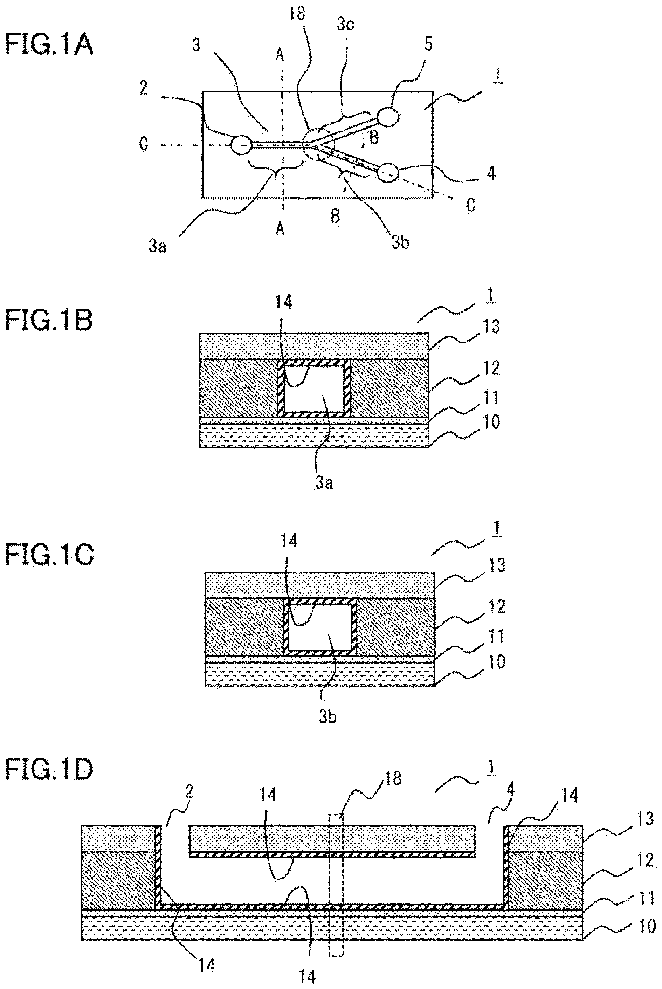

Figs. 1A to 1D are schematic diagrams each for describing a configuration example of a microfluidic chip 1 according to a first embodiment of the present invention. Specifically, Fig. 1A is a plan view of an overview of the microfluidic chip 1 according to the first embodiment. In addition, Fig. 1B is a diagram illustrating a cross section of the microfluidic chip 1 taken along a line A-A illustrated in Fig. 1A. In addition, Fig. 1C is a diagram illustrating a cross section of the microfluidic chip 1 taken along a line B-B illustrated in Fig. 1A. In addition, Fig. 1D is a diagram illustrating a cross section of the microfluidic chip 1 taken along a line C-C illustrated in Fig. 1A.

As illustrated in Fig. 1A, the microfluidic chip 1 includes an input section 2 (may also be referred to simply as an "inlet") from which a fluid (e.g., liquid) is introduced, a channel section 3 in which the fluid introduced from the input section 2 flows, and output sections 4 and 5 (may also be referred to simply as "outlets") each of which allows the fluid to be discharged from the channel section 3. In the microfluidic chip 1, the channel section 3 is covered with an upper covering layer 13 described below. The input section 2 and the output sections 4 and 5 are through holes provided in the upper covering layer 13. It is to be noted that one channel is divided at a branching section 18 into two channels toward the output sections 4 and 5 as the channel section 3. A trunk channel section 3a is included in the input section 2 to the branching section 18, a branch channel section 3b is included in the branching section 18 to the output section 4, and a branch channel section 3c is included in the branching section 18 to the output section 5. In addition, drug fixation sections (may be referred to as "near the outlets" below for the sake of convenience) that each fix a drug and bring a fluid and the drug introduced from the input section 2 into contact may be provided near the output sections 4 and 5. In a case where the drug fixation sections are provided, the output sections 4 and 5 may not necessarily be provided. Unless otherwise stated, the term output sections 4 and 5 in the narrow sense and the term drug fixation sections will be uniformly referred to as "output sections". It is to be noted that the substances that are tested by using a microfluidic chip are not each limited to drugs or the like.

Fig. 1A illustrates the channel section 3 that is visually recognized through the upper covering layer 13 having transparency. In addition, the microfluidic chip 1 illustrated in Fig. 1A is a microfluidic chip in which a channel branches in the middle from an inlet and has two outlets. This forms simple channels for assessing reactions between a test liquid and two drugs at the same time.

It is sufficient if the microfluidic chip 1 is provided with one or more input sections and two or more output sections. In addition, the plurality of channel sections 3 may be provided in the microfluidic chip 1 and the channel sections 3 may be designed to allow fluids introduced from the input sections 2 to merge or be separated.

Here, details of members included in the channel section 3 in the microfluidic chip 1 will be described.

As illustrated in Fig. 1B, the microfluidic chip 1 includes a substrate 10, a floor layer 11 that is provided on the substrate 10, a barrier layer 12 that is provided on the floor layer 11 and forms a channel, and the upper covering layer 13 that is provided on the opposite surface of the barrier layer 12 to the substrate 10. The trunk channel section 3a in which a fluid introduced from the input section 2 flows is a region surrounded by the substrate 10, the floor layer 11, the barrier layer 12, and the upper covering layer 13. A siloxane polymer containing layer 14 is formed on a surface of any of the floor layer 11, the barrier layer 12, and the upper covering layer 13. The siloxane polymer containing layer 14 does not necessarily have to have constant thickness. Details of the siloxane polymer containing layer 14 will be described below. As described above, a fluid is introduced to the trunk channel section 3a from the input section 2 provided in the upper covering layer 13. The floor layer 11 may be provided as a region that increases the adhesion between the substrate 10 and the barrier layer or changes the channel in hydrophobicity as described below.

As illustrated in Fig. 1C, the branch channel section 3b is a region surrounded by the floor layer 11, the barrier layer 12, and the upper covering layer 13 provided to the substrate 10 and has a basic configuration similar to that of Fig. 1B. A fluid flowing in the branch channel section 3b is discharged from the output section 4. It is to be noted that the description of the branch channel section 3b also applies to the branch channel section 3c unless otherwise stated in the following description.

The basic configuration in Fig. 1D, that is a cross-sectional view taken along the propagation direction of a channel, is similar to those of Figs. 1B and 1C.

The substrate 10, the floor layer 11, the barrier layer 12, and the upper covering layer 13 will be further described below.

### <Substrate>

The substrate 10 is a member that serves as the base of the microfluidic chip 1. The barrier layer 12 provided above the substrate 10 forms the shape of a channel of the channel section 3.

It is possible to form the substrate 10 by using any of a light-transmissive material or a non-light-transmissive material. For example, in a case where the state of the inside of the channel section 3 (e.g., the state of a fluid) is detected and observed using light, it is possible to use a material that is excellent in transparency to the light. It is possible to use resin, glass, or the like as the light-transmissive material. The resin used for the light-transmissive material that is used to form the substrate 10 may include an acrylic resin, a methacrylic resin, polypropylene, a polycarbonate resin, a cycloolefin resin, a polystyrene resin, a polyester resin, a urethane resin, a silicone resin, a fluorine-based resin, and the like from the perspective of the suitability for the formation of the main body of the microfluidic chip 1. In addition, a glass substrate having a surface coated with silicone or fluorine may be used.

In addition, for example, in a case where it is unnecessary to detect or observe the state of the inside of the channel section 3 (e.g., the state of a fluid) by using light, a non-light-transmissive material may be used. The non-light-transmissive material may include a silicon wafer, a copper plate, and the like. The thickness of the substrate 10 is not limited in particular, but a certain level of rigidity is necessary in a channel formation step and it is thus preferable that the thickness of the substrate 10 be within a range of 10 µm (0.01 mm) or more and 10 mm or less.

### <Floor Layer>

The floor layer 11 is provided on the substrate 10. It is possible to form the floor layer 11 by using a resin material. It is possible to use, for example, a photosensitive resin as the resin material of the floor layer 11.

It is desirable that the photosensitive resin which is used to form the floor layer 11 have photosensitivity to light having a wavelength of 190 nm or more and 400 nm or less, which is an ultraviolet region. It is possible to use a photoresist such as a liquid resist or a dry film resist as the photosensitive resin. These photosensitive resins may be either positive types in which the photosensitive regions dissolve or negative types in which the photosensitive regions become insoluble. A photosensitive resin composition suitable for the formation of the floor layer 11 in the microfluidic chip 1 includes a radical negative photosensitive resin including an alkali-soluble polymer, an additional polymerizable monomer, and a photopolymerization initiator. It is possible to use, for example, an acryl-based resin, an acrylic urethane-based resin (urethane acrylate-based resin), an epoxy-based resin, a polyamide-based resin, a polyimide-based resin, a polyurethane-based resin, a polyester-based resin, a polyether-based resin, a polyolefin-based resin, a polycarbonate-based resin, a polystyrene-based resin, a norbornene-based resin, a phenolic novolac-based resin, or another resin having photosensitivity alone, or use a mixture of some of the resins or use copolymerized resins as the photosensitive resin material.

In addition, it is more preferable from the perspective for facilitating the deposition of low-molecular weight siloxane volatilizing when polydimethylsiloxane (PDMS) described below is heated that the resin included in the floor layer 11 contain polysiloxane and a silane coupling agent. These are provided to generate a silanol bond to the low-molecular weight siloxane and facilitate the siloxane polymer containing layer 14 to be formed on the surface of the floor layer 11. In addition, the material containing the silane coupling agent is also favorable in itself from the perspective of an increase in the adhesion to the barrier layer 12. This perspective will be described in another embodiment below.

The thickness of the floor layer 11 is not particularly limited. However, the floor layer 11 does not have to be particularly thick, but is preferably thin from the perspective of increasing the adhesion between the substrate 10 and the barrier layer 12 or exposing the substrate 10 by patterning. It is preferable that the thickness of the floor layer 11 be within a range of 1 µm or more and 10 µm or less.

### <Barrier Layer>

The barrier layer 12 is one of components that are provided above the substrate and form the channel section 3. It is possible to form the barrier layer 12 by using a resin material. It is possible to use, for example, a photosensitive resin as the resin material of the barrier layer 12.

It is desirable that the photosensitive resin which is used to form the barrier layer 12 have photosensitivity to light having a wavelength of 190 nm or more and 400 nm or less, which is an ultraviolet region. It is possible to use a photoresist such as a liquid resist or a dry film resist as the photosensitive resin. These photosensitive resins may be either positive types in which the photosensitive regions dissolve or negative types in which the photosensitive regions become insoluble. A photosensitive resin composition suitable for the formation of the barrier layer 12 in the microfluidic chip 1 includes a radical negative photosensitive resin including an alkali-soluble polymer, an additional polymerizable monomer, and a photopolymerization initiator. It is possible to use, for example, an acryl-based resin, an acrylic urethane-based resin (urethane acrylate-based resin), an epoxy-based resin, a polyamide-based resin, a polyimide-based resin, a polyurethane-based resin, a polyester-based resin, a polyether-based resin, a polyolefin-based resin, a polycarbonate-based resin, a polystyrene-based resin, a norbornene-based resin, a phenolic novolac-based resin, or another resin having photosensitivity alone, or use a mixture of some of the resins or use copolymerized resins as the photosensitive resin material.

It is to be noted that the resin material of the barrier layer 12 is not limited to being a photosensitive resin in the first embodiment. For example, silicone rubber (PDMS: polydimethylsiloxane) or a synthetic resin may be used. It is possible to use, for example, a polymethyl methacrylate resin (PMMA), polycarbonate (PC), a polystyrene resin (PS), polypropylene (PP), a cycloolefin polymer (COP), a cycloolefin copolymer (COC), or the like as the synthetic resin. It is desirable to select the resin material of the barrier layer 12 as appropriate depending on the application.

In addition, the thickness of the barrier layer 12 above the substrate 10, that is, the height of the channel section 3 is not particularly limited, but the height of the channel section 3 has to be greater than an analysis/test target substance (e.g., a drug, a germ, a cell, a red blood cell, a white blood cell, or the like) included in a fluid introduced to the channel section 3. It is therefore preferable that the thickness of the barrier layer 12, that is, the height (depth) of the channel section 3 be within a range of 1 µm or more and 500 µm or less. It is more preferable that the height (depth) of the channel section 3 be within a range of 10 µm or more and 100 µm or less. It is still more preferable that the height (depth) of the channel section 3 be within a range of 40 µm or more and 60 µm or less. It is to be noted that the height (depth) of the channel section is a length in the direction perpendicular to the surfaces of the substrate.

In addition, the width of the channel section 3 similarly has to be greater than an analysis/test target substance. It is therefore preferable that the width of the channel section 3 defined by the barrier layer 12 be within a range of 1 µm or more and 1000 µm or less. It is more preferable that the width of the channel section 3 defined by the barrier layer 12 be within a range of 10 µm or more and 500 µm. It is still more preferable that the width of the channel section 3 defined by the barrier layer 12 be within a range of 10 µm or more and 100 µm or less. It is to be noted that the width of the channel is length in the direction parallel with the surfaces of the substrate and perpendicular to the direction of the channel length.

In addition, it is necessary to secure sufficient reaction time for a reaction solution. It is therefore preferable that the channel length determined by the barrier layer 12 be within a range of 10 mm or more and 100 mm or less. It is more preferable that the channel length determined by the barrier layer 12 be within a range of 30 mm or more and 70 mm or less. It is still more preferable that the channel length determined by the barrier layer 12 be within a range of 40 mm or more and 60 mm or less.

### <Upper Covering Layer>

In the microfluidic chip 1 according to the first embodiment, the upper covering layer 13 is a covering member (the upper covering layer 13 will also be referred to as the "covering member" in some cases for the sake of convenience below) that covers the channel section 3 as illustrated in Fig. 1B. As described above, the upper covering layer 13 is provided on the opposite surface of the barrier layer 12 to the substrate 10 and is opposed to the substrate 10 across the barrier layer 12. More specifically, as illustrated in Fig. 1B, the side end sections of the upper covering layer 13 are supported by the barrier layer 12 and the middle region is opposed to the substrate 10. The middle region defines the upper section of the channel section 3.

It is possible to form the upper covering layer 13 by using any of a light-transmissive material or a non-light-transmissive material. For example, in a case where the state of the inside of the channel section 3 (e.g., the state of a fluid) is detected and observed using light, it is possible to use a material that is excellent in transparency to the light. It is possible to use resin, glass, or the like as the light-transmissive material. The resin that is used to form the upper covering layer 13 may include an acrylic resin, a methacrylic resin, polypropylene, a polycarbonate resin, a cycloolefin resin, a polystyrene resin, a polyester resin, a urethane resin, a silicone resin, a fluorine-based resin, and the like from the perspective of the suitability for the formation of the main body of the microfluidic chip 1.

It is to be noted that the resin material of the upper covering layer 13 is not limited to the above in the first embodiment. For example, silicone rubber (PDMS: polydimethylsiloxane) or synthetic resin may be used. It is possible to use, for example, a polymethyl methacrylate resin (PMMA), polycarbonate (PC), a polystyrene resin (PS), polypropylene (PP), polyethylene terephthalate (PET), a cycloolefin polymer (COP), a cycloolefin copolymer (COC), or the like as the synthetic resin. It is desirable to select the resin material of the upper covering layer 13 as appropriate depending on the application. In particular, in the first embodiment, it is, however, desirable to use PDMS from the perspective of the formation of a siloxane polymer containing layer on the surfaces of the inside of the channel section 3.

The thickness of the upper covering layer 13 is not limited in particular, but it is preferable that the thickness of the upper covering layer 13 be within a range of 10 µm or more and 10 mm or less in view of the provision of respective through holes corresponding the input section 2 and the output sections 4 and 5 in the upper covering layer 13. In addition, it is desirable that the upper covering layer 13 have, in advance, respective holes corresponding to the input section 2 from which a fluid is introduced and the output sections 4 and 5 from each of which the fluid is discharged in the upper covering layer 13 before the upper covering layer 13 is bonded to the barrier layer 12.

### <Manufacturing Method>

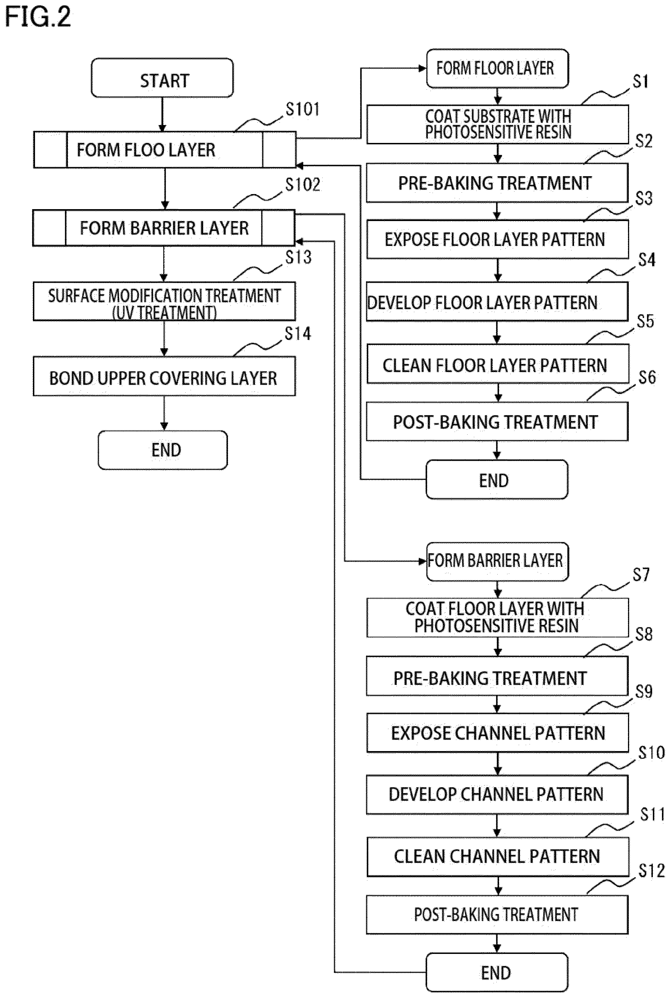

Next, a method for manufacturing the microfluidic chip 1 according to the first embodiment will be described. Fig. 2 is a flowchart illustrating an example of a method for manufacturing the microfluidic chip 1 according to the first embodiment.

Here, a case where the floor layer 11 and the barrier layer 12 are each formed by using a photosensitive resin will be described as an example.

In Fig. 2, the method for manufacturing the microfluidic chip includes steps of forming the floor layer 11 (step S101), forming the barrier layer 12 (step S102), conducting surface modification treatment (UV treatment) (step S13), and bonding the upper covering layer 13 (step S14). The step of forming the floor layer 11 (step S101) includes step S1 to step S6 described below. In addition, the step of forming the barrier layer (step S102) includes step S7 to step S12 described below.

### (Step S1)

In the method for manufacturing the microfluidic chip 1 according to the first embodiment, a step of coating the substrate 10 with resin is first performed. A resin layer that forms the floor layer 11 is thus provided on the substrate 10.

Examples of a method for forming the floor layer on the substrate 10 include coating the substrate 10 with a photosensitive resin. It is possible to conduct the coating, for example, by spin coating, spray coating, bar coating, or the like. Spin coating is preferable from the perspective of the controllability of the film thickness. It is possible to coat the substrate 10 with, for example, photosensitive resins having a variety of forms such as a liquid photosensitive resin, a solid photosensitive resin, a gel photosensitive resin, and a film photosensitive resin. One of preferable methods includes forming a photosensitive resin layer using a liquid resist.

In addition, it is sufficient if the substrate 10 is coated with resin (e.g., photosensitive resin) to keep the thickness of the resin layer (e.g., photosensitive resin layer), that is, the thickness of the floor layer 11 within a range of 1 µm or more and 10 µm or less.

### (Step S2)

Once the photosensitive resin is formed on the substrate 10, a step of conducting heating treatment (pre-baking treatment) is then performed for the purpose of removing a solvent medium (solvent) included in the resin (e.g., photosensitive resin) with which the substrate 10 is coated. It is to be noted that the pre-baking treatment is not an essential step for the method for manufacturing the microfluidic chip 1 according to the first embodiment, and may be carried out as appropriate at the optimum temperature and time depending on the characteristics of the resin. For example, in a case where the resin layer on the substrate 10 is a photosensitive resin, the pre-baking temperature and time are adjusted to optimum conditions as appropriate depending on the characteristics of the photosensitive resin.

### (Step S3)

Next, a step of exposing the resin (e.g., photosensitive resin) with which the substrate 10 is coated is performed. Specifically, the photosensitive resin with which the substrate 10 is coated is exposed to have a channel pattern drawn thereon. For example, an exposure apparatus or a laser lithography apparatus having a light source producing ultraviolet light can be used for the exposure. For example, one of preferable methods is exposure in which a proximity exposure or contact exposure apparatus having a light source producing ultraviolet light is used. In the case of a proximity exposure apparatus, exposure is performed through a photomask having a channel pattern arrangement in the microfluidic chip 1. A photomask or the like having a two-layer structure of chromium and chromium oxide as a light-shielding film may be used as the photomask.

In addition, as described above, a photosensitive resin having photosensitivity to light having a wavelength of 190 nm or more and 400 nm or less, which is an ultraviolet region, is used for the floor layer 11. It is thus sufficient if the photosensitive resin with which the substrate 10 is coated is sensitized to light having a wavelength of 190 nm or more and 400 nm or less in this step (exposure step).

In a case where the photosensitive resin with which the substrate 10 is coated is a positive resist, the exposure region is dissolved to expose the substrate 10. The photosensitive resin remaining in the non-exposure region serves as the floor layer 11. In addition, in a case where the photosensitive resin with which the substrate 10 is coated is a negative resist, the photosensitive resin remaining in the exposure region serves as the floor layer 11 and the non-exposure region is dissolved to expose the substrate 10. In this way, it is possible to form the floor layer 11 on the substrate 10 by using photolithography in the method for manufacturing the microfluidic chip 1 according to the first embodiment.

### (Step S4)

Next, a step of developing the exposed photosensitive resin to form a channel pattern is performed.

The development is conducted by reacting a photosensitive resin and a development liquid, for example, in a development apparatus of a spraying type, a dipping type, a puddle type, or the like. It is possible to use, for example, a sodium carbonate aqueous solution, tetramethyl ammonium hydroxide, potassium hydroxide, an organic solvent, or the like for the development liquid. An optimum development liquid depending on the characteristics of the photosensitive resin may be used as appropriate, but the development liquid is not limited to these. In addition, it is possible to adjust the concentration or the development processing time to optimum conditions as appropriate depending on the characteristics of the photosensitive resin.

### (Step S5)

Next, a step of cleaning the resin layer (photosensitive resin layer) on the substrate 10 of the development liquid used for the development is performed. It is possible to carry out the cleaning, for example, by a cleaning apparatus of a spray type, a shower type, an immersion type, or the like. An optimum cleaning water for removing the development liquid used for the development process may be used as the cleaning water as appropriate, for example, pure water, isopropyl alcohol, or the like. After cleaning, the resin layer is, for example, dried by a spin dryer or an IPA vapor dryer, or naturally dried.

### (Step S6)

Next, a step of conducting heating treatment (post-bake) on the floor layer 11 is performed. The residual moisture at the time of development or cleaning is removed through this post-baking treatment. The post-baking treatment is conducted by using, for example, a hot plate, an oven, or the like. In the case of insufficient drying in the cleaning step of step S5 above, the development liquid or the moisture at the time of cleaning may remain in the floor layer 11. In addition, solvent that is not removed through the pre-baking treatment may also remain in the floor layer 11. It is possible to remove this by conducting post-baking treatment.

### (Step S7)

Next, a step of coating the floor layer 11 with resin is performed. A resin layer that forms the barrier layer 12 is thus provided on the floor layer 11. In the method for manufacturing the microfluidic chip 1 according to the first embodiment, for example, a resin layer (photosensitive resin layer) including a photosensitive resin is formed on the floor layer 11.

Examples of a method for forming the photosensitive resin layer on the floor layer 11 include coating the floor layer 11 with a photosensitive resin. It is possible to conduct the coating, for example, by spin coating, spray coating, bar coating, or the like. Spin coating is preferable from the perspective of the controllability of the film thickness. It is possible to coat the floor layer 11 with, for example, photosensitive resins having a variety of forms such as a liquid photosensitive resin, a solid photosensitive resin, a gel photosensitive resin, and a film photosensitive resin. One of preferable methods includes forming a photosensitive resin layer by using a liquid resist.

In addition, the floor layer 11 may be coated with resin (e.g., photosensitive resin) to keep the thickness of the resin layer (e.g., photosensitive resin layer), that is, the thickness of the barrier layer 12 within a range of 5 µm or more and 100 µm or less.

### (Step S8)

Once the photosensitive resin is formed on the floor layer 11, a step of conducting heating treatment (pre-baking treatment) is then performed for the purpose of removing a solvent medium (solvent) included in the resin (e.g., photosensitive resin) with which the floor layer 11 is coated. It is to be noted that the pre-baking treatment is not an essential step for the method for manufacturing the microfluidic chip 1 according to the first embodiment, and may be carried out as appropriate at the optimum temperature and time depending on the characteristics of the resin. For example, in a case where the resin layer on the floor layer 11 is a photosensitive resin, the pre-baking temperature and time are adjusted to optimum conditions as appropriate depending on the characteristics of the photosensitive resin.

### (Step S9)

Next, a step of exposing the resin (e.g., photosensitive resin) with which the floor layer 11 is coated is performed. Specifically, the photosensitive resin with which the floor layer 11 is coated is exposed to have a channel pattern drawn thereon. For example, an exposure apparatus or a laser lithography apparatus having a light source producing ultraviolet light can be used for the exposure. For example, one of preferable methods is exposure in which a proximity exposure or contact exposure apparatus having a light source producing ultraviolet light is used. In the case of a proximity exposure apparatus, exposure is performed through a photomask having a channel pattern arrangement in the microfluidic chip 1. A photomask or the like having a two-layer structure of chromium and chromium oxide as a light-shielding film may be used as the photomask.

In addition, as described above, a photosensitive resin having photosensitivity to light having a wavelength of 190 nm or more and 400 nm or less, which is an ultraviolet region, is used for the barrier layer 12. It is thus sufficient if the photosensitive resin with which the floor layer 11 is coated is sensitized to light having a wavelength of 190 nm or more and 400 nm or less in this step (exposure step).

In a case where the photosensitive resin with which the floor layer 11 is coated is a positive resist, the exposure region is dissolved to serve as the channel section 3. The photosensitive resin remaining in the non-exposure region serves as the barrier layer 12. In addition, in a case where the photosensitive resin with which the floor layer 11 is coated is a negative resist, the photosensitive resin remaining in the exposure region serves as the barrier layer 12 and the non-exposure region is dissolved to serve as the channel section 3. In this way, it is possible to form the barrier layer 12 that configures the channel section 3 on the floor layer 11 by using photolithography in the method for manufacturing the microfluidic chip 1 according to the first embodiment.

It is to be noted that, in a case where a chemically amplified resist or the like is used to form a resin layer on the floor layer 11, it is favorable to further conduct heating treatment (post-exposure bake: PEB) after exposure to accelerate an acid catalyst reaction caused by the exposure.

### (Step S10)

Next, a step of developing the exposed photosensitive resin to form a channel pattern is performed.

The development is conducted by reacting a photosensitive resin and a development liquid, for example, in a development apparatus of a spraying type, a dipping type, a puddle type, or the like. It is possible to use, for example, a sodium carbonate aqueous solution, tetramethyl ammonium hydroxide, potassium hydroxide, an organic solvent, or the like for the development liquid. An optimum development liquid depending on the characteristics of the photosensitive resin may be used as appropriate, but the development liquid is not limited to these. In addition, it is possible to adjust the concentration or the development processing time to optimum conditions as appropriate depending on the characteristics of the photosensitive resin.

### (Step S11)

Next, a step of completely cleaning the resin layer (photosensitive resin layer) on the floor layer 11 of the development liquid used for the development is performed. It is possible to carry out the cleaning, for example, by a cleaning apparatus of a spray type, a shower type, an immersion type, or the like. An optimum cleaning water for removing the development liquid used for the development process may be used as the cleaning water as appropriate, for example, pure water, isopropyl alcohol, or the like. After cleaning, the resin layer is, for example, dried by a spin dryer or an IPA vapor dryer, or naturally dried.

### (Step S12)

Next, a step of conducting heating treatment (post-bake) on the channel pattern, that is, the barrier layer 12 that forms the channel section 3 is performed. The residual moisture at the time of development or cleaning is removed through this post-baking treatment. The post-baking treatment is conducted by using, for example, a hot plate, an oven, or the like. In the case of insufficient drying in the cleaning step of step S11 above, the development liquid or the moisture at the time of cleaning may remain in the barrier layer 12. In addition, the solvent that is not removed through the pre-baking treatment may also remain in the barrier layer 12. It is possible to remove this by conducting post-baking treatment.

### (Step S13)

After the post-baking treatment, a step of conducting surface modification treatment on the barrier layer 12 and the upper covering layer 13 (covering member) that has not yet been bonded to the barrier layer 12 is performed. As an example of the surface modification treatment, UV treatment is conducted. Additionally, if the surface modification treatment may be performed as appropriate when needed. The surface modification treatment is not an essential step for the method for manufacturing the microfluidic chip 1 according to the first embodiment.

### (Step S14)

Next, a step of bonding the upper covering layer 13 to the barrier layer 12 that has been subjected to the post-baking treatment is performed. In this step, the upper covering layer 13 is bonded to the opposite surface of the barrier layer 12 to the substrate 10 as illustrated in Figs. 1B to 1D. This covers the channel section 3 with the upper covering layer 13 to form the microfluidic chip 1.

It is possible to use thermocompression in which, for example, a thermal press machine or a thermal roll machine is used as the method that bonds together the substrates subjected to the surface modification treatment in step S13 above. However, in a case where PDMS or the like having flexibility is used as a covering member, it is also possible to bond the substrates with no pressure applied.

It is desirable that the upper covering layer 13 have holes corresponding to the input section 2 and the output sections 4 and 5 for fluids formed therein in advance before the upper covering layer 13 is bonded to the barrier layer 12. This makes it possible to prevent problems with the occurrence of debris and contamination in comparison with a case where holes are made after the barrier layer 12 is bonded.

Additionally, in a case where heat is applied, it is desirable to adjust the conditions depending on the properties of material. For example, it is possible to bond the upper covering layer 13 to the barrier layer 12 by using heating means such as a hot plate at 40°C or more for 5 min or more.

The method for bonding the barrier layer 12 and the upper covering layer 13 is not limited to thermocompression as described above. A method in which an adhesive is used or a method for joining and bonding the barrier layer 12 and the upper covering layer 13 without using adhesive by conducting surface modification treatment on the bonding surfaces between the barrier layer 12 and the upper covering layer 13 may be carried out.

In a case where an adhesive is used for bonding, it is possible to determine the adhesive on the basis of the affinity or the like with the materials included in the barrier layer 12 and the upper covering layer 13. The adhesive is not limited in particular as long as the adhesive allows the barrier layer 12 and the upper covering layer 13 to be bonded. For example, it is possible to use an acrylic resin-based adhesive, a urethane resin-based adhesive, an epoxy resin-based adhesive, or the like as the adhesive in the first embodiment.

In addition, the method for bonding with no adhesive by conducting surface modification treatment includes UV treatment, plasma treatment, corona discharge treatment, excimer laser treatment, and the like. In this case, the reactivity of the surface of the barrier layer 12 may be increased and the optimum treatment method be selected as appropriate depending on the affinity and the adhesion compatibility between the barrier layer 12 and the upper covering layer 13. Additionally, in the case of bonding by conducting surface modification treatment, the steps up to step S13 of bonding the barrier layer 12 and the upper covering layer 13 may be performed.

An example in which the substrate 10 is coated with a photosensitive resin and the barrier layer 12 that configures the channel section 3 is formed by using photolithography has been described here, but the present invention is not limited to this example. The resin used to form a resin layer serving as the barrier layer 12 above the substrate 10 may be, for example, silicone rubber (PDMS) or synthetic resin (such as a PMMA, PC, a PS, PP, a COP, or a COC). For example, in a case where the barrier layer 12 is formed by using silicone rubber, a channel pattern (the barrier layer 12 that configures the channel section 3) may be formed by forming a channel pattern template with photolithography and transferring the channel pattern template to the silicone rubber.

### [Example of First Embodiment]

Example of the first embodiment will be described below in accordance with a mode in which the siloxane polymer containing layer 14 is provided on a surface of at least any of the floor layer 11, the barrier layer 12, and the upper covering layer 13. For this reason, a siloxane polymer and a contact angle that are each important for achieving hydrophobicity will be first described.

### <Siloxane Component Volatilized by Heating PDMS>

The derivation of the siloxane of the siloxane polymer containing layer 14 will be explained. Siloxanes are known to be generated from familiar silicone products. Siloxane generated as outgas (referred to as "off-gas" below) is a component that easily volatilizes and easily adheres to a substrate or the like. This siloxane has properties of volatilizing in minute amounts even at ordinary temperature and has properties that heating increases the amount of outgassed volatile siloxane and components having a higher level of polymerization volatize with an increase in heating temperature. The present disclosure has focused on hydrophobization brought about by the deposition of this low-molecular weight siloxane on the surface of the substrate. Depending on the quality of PDMS, low-molecular weight siloxane polymers such as cyclic siloxanes D3 to D20 or chain siloxanes M2 to M20 volatilize. To carry out an example of the first embodiment, it is important to confirm in advance the temperature dependence of low-molecular weight siloxanes volatilizing from PDMS.

### <Method for Measuring Low-molecular Weight Siloxane>

To measure low-molecular weight siloxane volatilizing from PDMS and low-molecular weight siloxane deposited on the surface of the substrate, it is preferable to use thermal extraction gas chromatography-mass spectrometry (GC/MS). The GC/MS is a composite apparatus obtained by coupling a gas chromatograph (GC) that separates a vaporized mixture into single components and a mass spectrometer (MS) that performs qualitative/quantitative analysis by ionizing respective separated components to acquire the mass spectra. A GC/MS is a preferable apparatus for a quantitative analysis of low-molecular weight siloxane. It is possible to measure the temperature dependence of volatilizing siloxane components by changing heating temperature at the time of analyses. In a quantitative method, the cyclic siloxanes are calculated as relative standard concentrations by using decamethylcyclopentasiloxane (D5) as a standard substance. The chain siloxanes are calculated as relative standard concentrations by using octamethyltrisiloxane (M3) as a standard substance.

### <Change in Contact Angle in Manufacturing Process Step of Microfluidic Chip>

An example of an index indicating whether a predetermined layer exhibits hydrophobicity or hydrophilicity includes a contact angle. A change in the contact angle of a layer in a process step of the method for manufacturing the microfluidic chip described above will be described. Roughly speaking, the contact angle changes between a contact angle (referred to as θ1) in a step (step S102) of forming the barrier layer 12 that forms the channel section 3, a contact angle (referred to as θ2) after a step (step S13) of conducting surface modification treatment on the upper covering layer 13 (covering member) that has not yet been bonded to the barrier layer 12, and a contact angle (referred to θ3) after a step (step S14) of bonding the upper covering layer 13 to the barrier layer 12. θ1 represents the contact angle of material itself. It is therefore preferable from the perspective for suppressing backflow of droplets to use a material having a high contact angle. Next, in step S13, oxygen radicals (O·) or hydroxy radicals (HO·) produced by the surface modification treatment form a hydrophilic group (-C=O, -OH, or -COOH) on a surface. This hydrophilizes the surface of the material and decreases the contact angle of θ2 (θ1 > θ2). There is an effect of decreasing the contact angle (increasing the hydrophilicity) with an increase in irradiation energy or an increase in irradiation time. Next, in step S14, heating treatment is conducted during bonding. This deposits low-molecular weight siloxane volatilizing from PDMS on the surface of the material and hydrophobizes the surface of the material to increase the contact angle of θ3 (θ2 < θ3). There is an effect of increasing the amount of low-molecular weight siloxane deposited on the surface and increasing the contact angle (increasing the hydrophobicity) with an increase in temperature that is a heating condition or an increase in treatment time that is a heating condition. As a result of intensive studies, the inventors of the present application have found that it is possible to optionally control the contact angle of the surface of the material in the channel of the microfluidic chip by controlling the surface modification treatment conditions in step S13, and the heating conditions (temperature and time) in step S14 described above or heating conditions (temperature and time) using a heating furnace described below. It has been found that the control over the heating conditions in step S14 is particularly important. In the present disclosure, the optional contact angle control is achieved by the PDMS heating conditions.

### <Method for Measuring Contact Angle>

As a method for measuring a contact angle, a syringe is filled with water and mounted on a contact angle meter. Parameters are set such as the waiting time [msec] up to a measurement, the measurement time interval [msec], and the number of consecutive measurements [the number of times]. Water is dropped on a surface of a sample from the syringe, an image is captured, and the contact angle of the droplet is measured. As a method for measuring a static contact angle, a sessile drop method is adopted. The sessile drop method is a method for obtaining a contact angle θ from a radius r and height h of a dropped droplet on the premise that the droplet is part of a sphere.

The amount of liquid used for a normal contact angle measurement is typically 1 to 2 µL, but this amount of liquid forms a droplet having a diameter of 1 mm or more on a surface of a solid body. In the microfluidic chip, regions to be measured are micro-regions at a level of several microns in many cases. It is preferable to use, instead of a normal contact angle meter, an apparatus that drops picoliter-order droplets to allow the wettability behavior of the micro-regions to be assessed. For example, droplets in units of picoliters are produced by using a piezo-titrator and a high-powered camera equipped with an objective lens is used to allow a microdroplet to be measured. In addition, microdroplets evaporate extremely quickly and it is thus more preferable to use a high-speed camera.

Next, a main combination of a first photosensitive resin and a second photosensitive resin used in Example and a formation method will be described. The first photosensitive resin serves as the floor layer 11. The second photosensitive resin serves as the barrier layer 12.

### <Combination 1>

Examples of combinations of the first photosensitive resin and the second photosensitive resin will be described in Table 1. The composition (components) of the first photosensitive resin used as the floor layer 11 includes polysiloxane and an acrylic monomer. The contact angle θ1 of the first photosensitive resin is 100°. The composition (components) of the second photosensitive resin used as the barrier layer 12 includes polysiloxane and an acrylic monomer. The contact angle θ1 of the second photosensitive resin is 100°.

The formation of the floor layer 11 (step S101) will be described. In a case where the substrate 10 is coated with the first photosensitive resin (step S1), spin coating is conducted. A wafer for coating is rotated at a coating rotation speed of 700 rpm for 10 sec. In pre-baking treatment (step S2), the wafer is heated to 90°C for 60 sec. A pattern of the floor layer 11 is exposed (step S3) at an exposure value of 70 mJ/cm2. To develop the pattern of the floor layer 11 (step S4), a sodium carbonate aqueous solution is used as a development liquid and development time is set to 90 sec. To clean the pattern of the floor layer 11 (step S5), the pattern of the floor layer 11 is washed with water for 60 sec. Post-baking treatment (step S6) is conducted at 230°C for 30 min.

The formation of the barrier layer 12 (step S102) will be described. In a case where the floor layer 11 is coated with the second photosensitive resin (step S7), spin coating is conducted at a coating rotation angle of 500 rpm for 10 sec. Pre-baking treatment (step S8) is conducted at 130°C for 180 sec. A channel pattern is exposed (step S9) at an exposure value of 60 mJ/cm2. To develop the channel pattern (step 10), a sodium carbonate aqueous solution is used as a development liquid, and the channel pattern is developed for a development time of 180 sec and washed with water for 60 sec. To clean the channel pattern (step S11), the channel pattern is washed with water for 60 sec. Post-baking treatment (step S12) is conducted at 230°C for 30 min.

**[Table 1]**

| | First photosensitive resin | Second photosensitive resin |
|---|---|---|
| | Floor | Barrier layer |
| Material characteristics | Negative | Negative |
| | Liquid | Liquid |
| Composition/components | Polysiloxane | Polysiloxane |
| | Acrylic monomer | Acrylic monomer |
| Contact angle | 100° | 100° |
| Coating rotation speed | 700 rpm/10 sec | 500 rpm/10 sec |
| Pre-bake | 90°C/60 sec | 130°C/180 sec |
| Exposure | 70 mj/cm² | **60** mj/cm² |
| Development liquid | Sodium carbonate | Sodium carbonate |
| Development time | 90 sec | 180 sec |
| Washing with water | 60 sec | 60 sec |
| Post-bake | 230°C/30 min | 230°C/30 min |

### <Combination 2>

Other examples of combinations of the first photosensitive resin and the second photosensitive resin will be described in Table 2. The composition (components) of the first photosensitive resin used as the floor layer 11 includes an acrylic resin and an epoxy resin. The contact angle θ1 of the first photosensitive resin is 60°. The composition (components) of the second photosensitive resin used as the barrier layer 12 includes polysiloxane and an acrylic monomer. The contact angle of the second photosensitive resin is 100°.

Conditions for forming the floor layer 11 (step S101) and conditions for forming the barrier layer 12 (step S102) are the same as those of Table 1.

**[Table 2]**

| | First photosensitive resin | Second photosensitive resin |
|---|---|---|
| | Floor | Barrier layer |
| Material characteristics | Negative | Negative |
| | Liquid | Liquid |
| Composition/components | Acrylic resin | Polysiloxane |
| | Epoxy resin | Acrylic monomer |
| Contact angle | 60° | 100° |
| Coat rotation speed | 700 rpm/10 sec | 500 rpm/10 sec |
| Pre-bake | 90°C/60 sec | 130°C/180 sec |
| Exposure | 70 mj/cm² | 60 mj/cm² |
| Development liquid | Sodium carbonate | Sodium carbonate |
| Development time | 90 sec | 180 sec |
| Washing with water | 60 sec | 60 sec |
| Post-bake | 230°C/30 min | 230°C/30 min |

### <Combination 3>

Other examples of combinations of the first photosensitive resin and the second photosensitive resin will be described in Table 3. The composition (components) of the first photosensitive resin used as the floor layer 11 includes polysiloxane and an acrylic monomer. The contact angle θ1 of the first photosensitive resin is 100°. The composition (components) of the second photosensitive resin used as the barrier layer 12 includes an acrylic resin and an acrylic monomer. The contact angle θ1 of the second photosensitive resin is 70°.

The formation of the floor layer 11 (step S101) will be described. In a case where the substrate is coated with the first photosensitive resin (step S1 in Fig. 2), spin coating is conducted. A wafer for coating is rotated at a coat rotation speed of 1100 rpm for 30 sec. In pre-baking treatment (step S2 in Fig. 2), the wafer is heated to 90°C for 90 sec. A pattern of the floor layer 11 is exposed (step S3 in Fig. 2) at an exposure value of 100 mJ/cm2. To develop the pattern of the floor layer 11 (step S4 in Fig. 2), a development liquid of sodium carbonate is used and development time is set to 180 sec. To clean the pattern of the floor layer 11 (step S5 in Fig. 2), the pattern of the floor layer 11 is washed with water for 60 sec. Post-baking treatment (step S6 in Fig. 2) is conducted at 230°C for 30 min.

Conditions for forming the barrier layer 12 (step S102) are the same as those of Table 1.

**[Table 3]**

| | First photosensitive resin | Second photosensitive resin |
|---|---|---|
| | Floor | Barrier layer |
| Material characteristics | Negative | Negative |
| | Liquid | Liquid |
| Composition/components | Polysiloxane | Acrylic resin |
| | Acrylic monomer | Acrylic monomer |
| Contact angle | 100° | 70° |
| Coat rotation speed | 1100 rpm/30 sec | 500 rpm/10 sec |
| Pre-bake | 90°C/90 sec | 130°C/180 sec |
| Exposure | 100 mj/cm² | 60 mj/cm² |
| Development liquid | Sodium carbonate | Sodium carbonate |
| Development time | 180 sec | 180 sec |
| Washing with water | 60 sec | 60 sec |
| Post-bake | 230°C/30 min | 230°C/30 min |

### <Combination 4>

Other examples of combinations of the first photosensitive resin and the second photosensitive resin will be described in Table 4. The composition (components) of the first photosensitive resin used as the floor layer 11 includes an acrylic resin and an epoxy resin. The contact angle θ1 of the first photosensitive resin is 60°. The composition (components) of the second photosensitive resin used as the barrier layer 12 includes an acrylic resin and an acrylic monomer. The contact angle θ1 of the second photosensitive resin is 70°.

Conditions for forming the floor layer 11 (step S101) and conditions for forming the barrier layer 12 (step S102) are the same as those of Table 1.

**[Table 4]**

| | First photosensitive resin | Second photosensitive resin |
|---|---|---|
| | Floor | Barrier layer |
| Material characteristics | Negative | Negative |
| | Liquid | Liquid |
| Composition/components | Acrylic resin | Acrylic resin |
| | Epoxy resin | Acrylic monomer |
| Contact angle | 60° | 70° |
| Coat rotation speed | 700 rpm/10 sec | 500 rpm/10 sec |
| Pre-bake | 90°C/60 sec | 130°C/180 sec |
| Exposure | 70 mj/cm² | 60 mj/cm² |
| Development liquid | Sodium carbonate | Sodium carbonate |
| Development time | 90 sec | 180 sec |
| Washing with water | 60 sec | 60 sec |
| Post-bake | 230°C/30 min | 230°C/30 min |

### (Example 1)

In Example 1, the first photosensitive resin of Table 1 was used for a floor layer and PDMS was used for members corresponding to a barrier layer and an upper covering layer to fabricate a microfluidic chip.

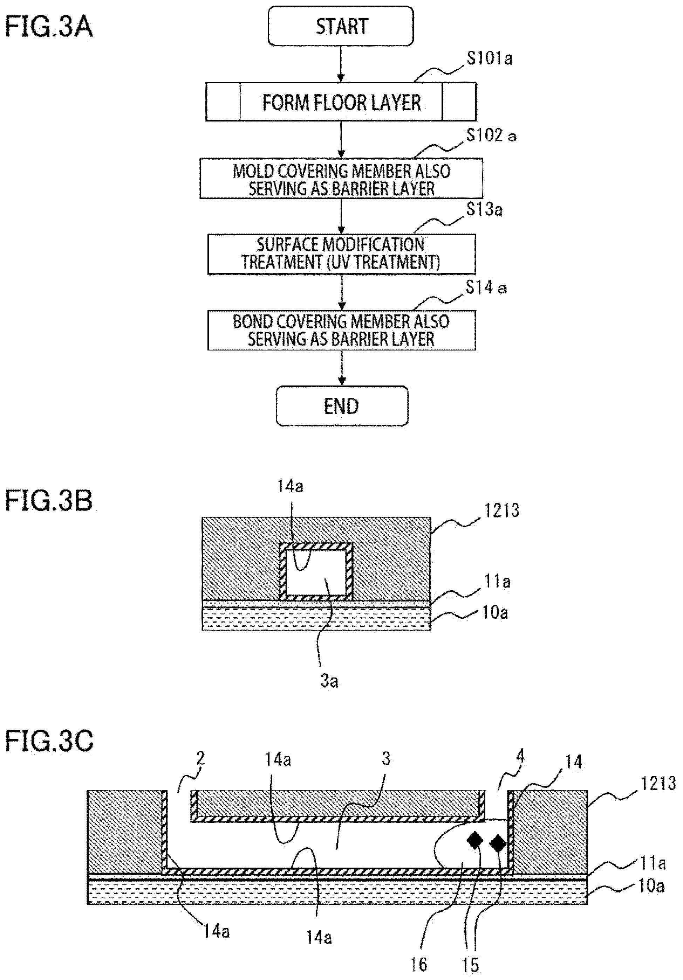

Fig. 3A is a flowchart illustrating a manufacturing method according to Example 1. Here, step S101a of forming the floor layer corresponds to step S101 of Fig. 2. The present disclosure will simplify or will not describe what have relationships similar to the relationships between the configurations and steps of Figs. 1 and 2 in some cases below.

Step S102a is different from step S102 in that the barrier layer and the upper covering layer are integrally molded by using molds. First, 100 g of two-component potting liquid silicone rubber TSE3032(A) and 10 g of two-component potting liquid silicone rubber TSE3032(B) (both manufactured by MOMENTIVE) were weighed out and stirred at 500 rpm for 15 min by using a stirrer. After that, the silicone rubbers were cast into molds that were cut to have a channel pattern, and heated in an oven at 150°C for 30 min for curing.

In step 13a, the bonding surface of the floor layer and the bonding surface of a molding produced by using the molds were irradiated with UV light. The amount of UV irradiation was 1000 mJ/cm2. Additionally, it was confirmed that the contact angle θ2 of the floor layer decreased to 30° after the UV irradiation. In addition, it was confirmed that the contact angle θ2 of PDMS serving as both the barrier layer and the covering member decreased to 60°.

Step S14a is different from step S14 in that the upper covering layer integrally molded with the barrier layer is bonded to the substrate side as a covering member (referred to as a "covering member also serving as the barrier layer" below) 1213. In step S14a, the covering member 1213 also serving as the barrier layer was heated on a hot plate at 200°C for 10 min with the bonding surfaces bonded together, thereby bonding the covering member 1213.

Fig. 3B is a cross-sectional view of a microfluidic chip manufactured in Example 1 corresponding to the cross-sectional view taken along A-A in Fig. 1B. In addition, Fig. 3C is a cross-sectional view of the microfluidic chip manufactured in Example 1 corresponding to the cross-sectional view taken along C-C in Fig. 1D. It is to be noted that a cross-sectional view corresponding to the cross-sectional view taken along B-B of Fig. 1C has a configuration similar to the configuration of Fig. 3B and will be thus omitted.

A floor layer 11a was formed on a surface of a substrate 10a. The covering member 1213 also serving as the barrier layer was bonded to the floor layer 11a to surround the channel section 3. Additionally, it was confirmed by GC/MS analysis (gas chromatography-mass spectrometry) that a siloxane polymer containing layer 14a was formed on a surface of the covering member 1213 also serving as the barrier layer and a surface of the floor layer 11a. The contact angle θ3 of the floor layer 11a was 90° and the contact angle θ3 of the covering member 1213 also serving as the barrier layer was 90°.

Additionally, it was confirmed by GC/MS analysis that the siloxane polymer containing layer 14a formed on any of the floor layer 11a and the covering member 1213 also serving as the barrier layer also contained siloxane polymers D3 to D20 (see Table 6 described below).

In addition, Fig. 3C illustrates evaluation of a reaction between drugs 15 and a test liquid 16. In Fig. 3C, the drugs 15 are supplied from an outlet 4 in advance. The test liquid 16 is injected from an inlet 2 and the test liquid is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to carry out a reaction assessment of a test liquid and two types of drugs without contamination between the reaction solutions of the respective drugs.

### (Example 2)

In Example 2, the first photosensitive resin and the second photosensitive resin described in Table 1 were used for a floor layer and a barrier layer. PDMS was used for an upper covering layer. Except for them, a microfluidic chip was fabricated under the conditions similar to those of Example 1.

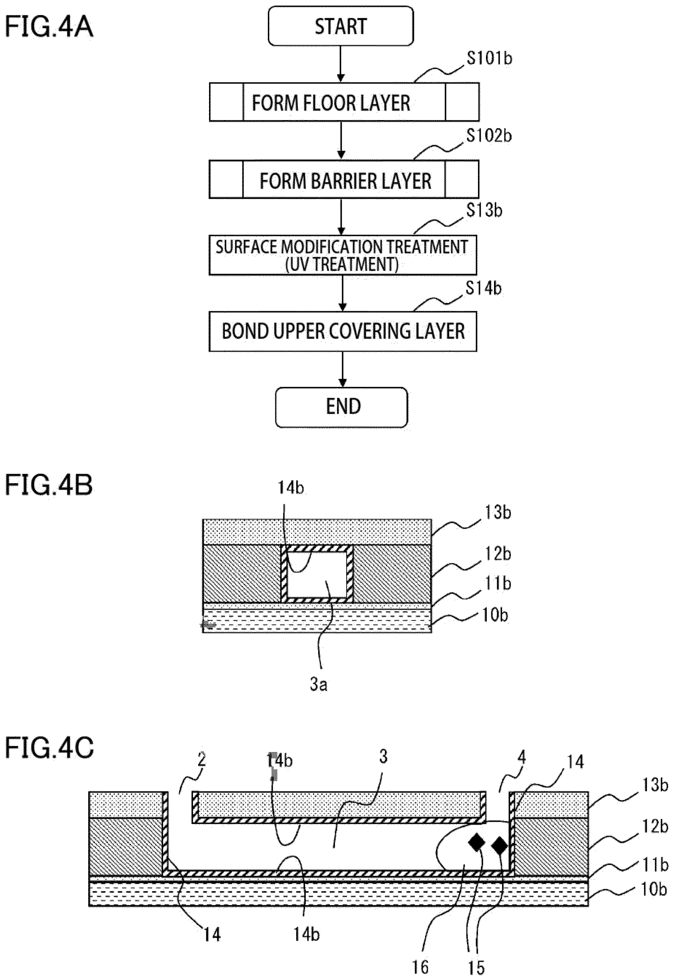

Fig. 4A is a flowchart illustrating a manufacturing method according to Example 2.

It was confirmed that the contact angle θ2 of the floor layer decreased to 30° after UV irradiation in step 13b. In addition, it was confirmed that the contact angle θ2 of the barrier layer decreased to 40°.

In step S14b, the upper covering layer was heated on a hot plate at 200°C for 10 min with the bonding surfaces bonded together, thereby bonding the upper covering layer.

Fig. 4B is a cross-sectional view of a microfluidic chip manufactured in Example 2 corresponding to the A-A cross-sectional view taken along in Fig. 1B. In addition, Fig. 4C is a cross-sectional view of the microfluidic chip manufactured in Example 2 corresponding to the C-C cross-sectional view taken along in Fig. 1D. It is to be noted that a cross-sectional view corresponding to the B-B cross-sectional view of Fig. 1C has a configuration similar to the configuration of Fig. 4B and will be thus omitted.

A floor layer 11b was formed on a surface of a substrate 10b. A barrier layer 12b defines the channel 3. An upper covering layer 13b is bonded to the barrier layer 12b to surround the channel section 3. Additionally, it was confirmed by GC/MS analysis (gas chromatography-mass spectrometry) that a siloxane polymer containing layer 14b was formed on surfaces of the floor layer 11b, the barrier layer 12b, and the upper covering layer 13b. The contact angle θ3 of the floor layer 11b was 100°, the contact angle of the barrier layer 12b was 90°, and the contact angle of the upper covering layer 13b was 130°.

Additionally, it was confirmed by GC/MS analysis that the siloxane polymer containing layer 14b formed on any of the floor layer 11b, the barrier layer 12b, and the upper covering layer 13b also contained siloxane polymers D3 to D20 (see Table 6 described below).

In addition, Fig. 4C illustrates evaluation of a reaction between drugs 15 and the test liquid 16. In Fig. 4C, the drugs 15 are supplied from the outlet 4 in advance. The test liquid 16 is injected from the inlet 2 and the test liquid 16 is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to carry out a reaction assessment of a test liquid and two types of drugs without contamination between the reaction solutions of the respective drugs.

### (Example 3)

In Example 3, the first photosensitive resin and the second photosensitive resin described in Table 1 were used for a floor layer and a barrier layer. An acrylic resin was used for an upper covering layer.

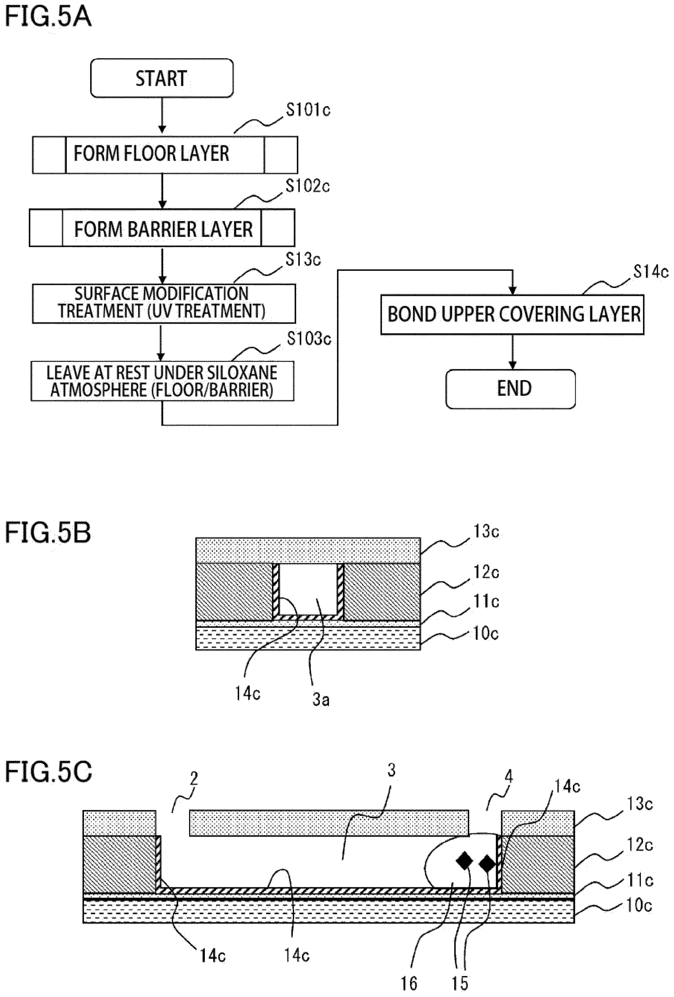

Fig. 5A is a flowchart illustrating a manufacturing method according to Example 3. Example 3 includes a step (step S103c) of leaving the floor layer and the barrier layer to rest under a siloxane atmosphere. Except for them, a microfluidic chip was fabricated under the conditions similar to those of Example 1.

It was confirmed that the contact angle θ2 of the floor layer decreased to 30° after UV irradiation in step 13c. In addition, it was confirmed that the contact angle θ2 of the barrier layer decreased to 40°.

In step 103c, after PDMS was heated to 200°C in a heating furnace and left to rest for 5 min, a substrate above which the floor layer and the barrier layer were formed was left to rest in the heating furnace for 10 min. It is to be noted that the time for which the floor layer and the like are left to rest is not limited to this time. For example, it is possible to leave the floor layer and the like to rest for 5 min or more.

In step S14c, the upper covering layer was heated on a hot plate at 200°C for 10 min with the bonding surfaces bonded together, thereby bonding the upper covering layer.

Fig. 5B is a cross-sectional view of a microfluidic chip manufactured in Example 3 corresponding to the cross-sectional view taken along A-A in Fig. 1B. In addition, Fig. 5C is a cross-sectional view of the microfluidic chip manufactured in Example 3 corresponding to the cross-sectional view taken along C-C in Fig. 1D. It is to be noted that a cross-sectional view corresponding to the B-B cross-sectional view of Fig. 1C has a configuration similar to the configuration of Fig. 5B and will be thus omitted.

A floor layer 11c was formed on a surface of a substrate 10c. A barrier layer 12c defines the channel section 3. An upper covering layer 13c is bonded to the barrier layer 12c to surround the channel section 3. Additionally, it was confirmed by GC/MS analysis (gas chromatography-mass spectrometry) that a siloxane polymer containing layer 14c was formed on surfaces of the floor layer 11c and the barrier layer 12c. The contact angle θ3 of the floor layer 11c was 110°, the contact angle θ3 of the barrier layer 12c was 90°, and the contact angle θ3 of the upper covering layer 13c was 40°.

Additionally, it was confirmed by GC/MS analysis that the siloxane polymer containing layer 14c formed on any of the floor layer 11c and the barrier layer 12c also contained siloxane polymers D3 to D20 (see Table 6 described below).

In addition, Fig. 5C illustrates evaluation of reaction between the drugs 15 and the test liquid 16. In Fig. 5C, the drugs 15 are supplied from the outlet 4 in advance. The test liquid 16 is injected from the inlet 2 and the test liquid 16 is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to carry out a reaction assessment of a test liquid and two types of drugs without contamination between the reaction solutions of the respective drugs.

### (Example 4)

In Example 4, the first photosensitive resin and the second photosensitive resin described in Table 2 were used for a floor layer and a barrier layer. PDMS was used for an upper covering layer. Except for them, a microfluidic chip was fabricated under the conditions similar to those of Example 1.

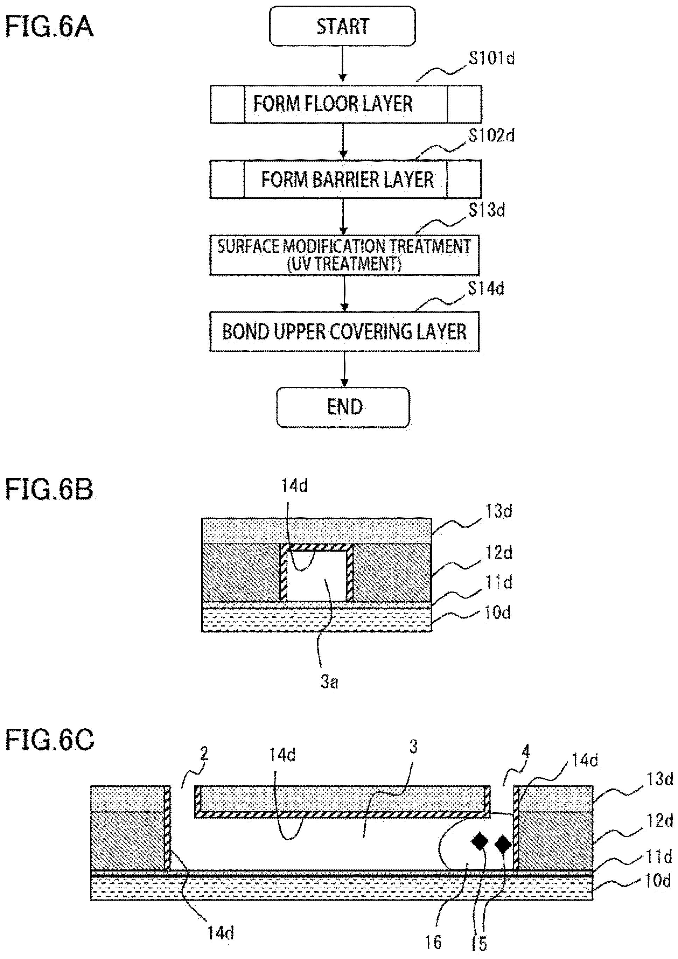

Fig. 6A is a flowchart illustrating a manufacturing method according to Example 4.

Fig. 6B is a cross-sectional view of a microfluidic chip manufactured in Example 4 corresponding to the cross-sectional view taken along A-A in Fig. 1B. In addition, Fig. 6C is a cross-sectional view of the microfluidic chip manufactured in Example 4 corresponding to the cross-sectional view taken along C-C in Fig. 1D. It is to be noted that a cross-sectional view corresponding to the B-B cross-sectional view of Fig. 1C has a configuration similar to the configuration of Fig. 6B and will be thus omitted.

A floor layer 11d was formed on a surface of a substrate 10d. A barrier layer 12d defines the channel section 3. An upper covering layer 13d is bonded to the barrier layer 12b to surround the channel section 3. Additionally, it was confirmed by GC/MS analysis (gas chromatography-mass spectrometry) that a siloxane polymer containing layer 14d was formed on surfaces of the barrier layer 12d and the upper covering layer 13d. The contact angle θ3 of the floor layer 11d was 60°, the contact angle of the barrier layer 12d was 90°, and the contact angle of the upper covering layer 13d was 110°.

Additionally, it was confirmed by GC/MS analysis that the siloxane polymer containing layer 14d formed on any of the barrier layer 12d and the upper covering layer 13d also contained siloxane polymers D3 to D20 (see Table 6 described below).

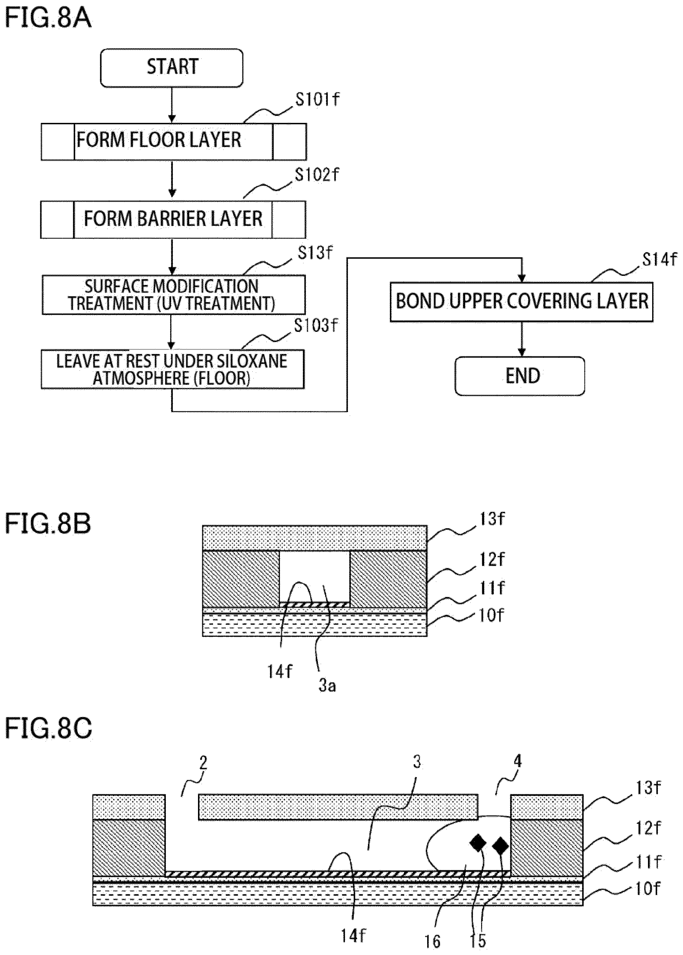

In addition, Fig. 6C illustrates examination of reaction between the drugs 15 and the test liquid 16. In Fig. 8C, the drugs 15 are supplied from the outlet 4 in advance. The test liquid 16 is injected from the inlet 2 and the test liquid 16 is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to carry out a reaction assessment of a test liquid and two types of drugs without contamination between the reaction solutions of the respective drugs.

### (Example 5)

In Example 5, the first photosensitive resin and the second photosensitive resin described in Table 3 were used for a floor layer and a barrier layer. PDMS was used for an upper covering layer.

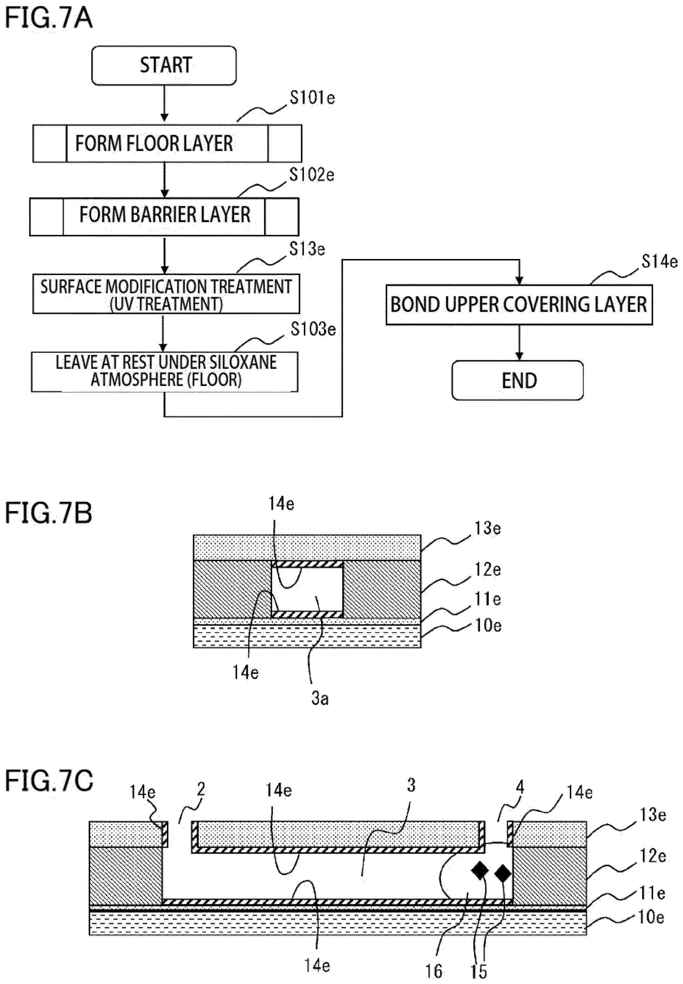

Fig. 7A is a flowchart illustrating a manufacturing method according to Example 5. Example 5 includes a step (step S103e) of leaving the floor layer to rest under a siloxane atmosphere. Except for them, a microfluidic chip was fabricated under the conditions similar to those of Example 1.

In step 103e, after PDMS was heated to 200°C in a heating furnace and left to rest for 5 min, a substrate on which the floor layer was formed was left to rest in the heating furnace for 10 min.

Fig. 7B is a cross-sectional view of a microfluidic chip manufactured in Example 5 corresponding to the cross-sectional view taken along A-A in Fig. 1B. Fig. 7B is a cross-sectional view of a microfluidic chip manufactured in Example 5 corresponding to the cross-sectional view taken along A-A in Fig. 1B. In addition, Fig. 7C is a cross-sectional view of the microfluidic chip manufactured in Example 5 corresponding to the cross-sectional view taken along C-C in Fig. 1D. It is to be noted that a cross-sectional view corresponding to the B-B cross-sectional view of Fig. 1C has a configuration similar to the configuration of Fig. 7B and will be thus omitted.

A floor layer 11e was formed on a surface of a substrate 10e. A barrier layer 12e defines the channel section 3. An upper covering layer 13e is bonded to the barrier layer 12e to surround the channel section 3. Additionally, it was confirmed by GC/MS analysis (gas chromatography-mass spectrometry) that a siloxane polymer containing layer 14e was formed on surfaces of the floor layer 11e and the upper covering layer 13e. The contact angle θ3 of the floor layer 11e was 100°, the contact angle θ3 of the barrier layer 12e was 70°, and the contact angle θ3 of the upper covering layer 13e was 110°.

Additionally, it was confirmed by GC/MS analysis that the siloxane polymer containing layer 14e formed on any of the floor layer 11e and the upper covering layer 13e also contained siloxane polymers D3 to D20 (see Table 6 described below).

In addition, Fig. 7C illustrates evaluation of a reaction between the drugs 15 and the test liquid 16. In Fig. 7C, the drugs 15 are supplied from the outlet 4 in advance. The test liquid 16 is injected from the inlet 2 and the test liquid 16 is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to carry out evaluation of a reaction of a test liquid and two types of drugs without contamination between the reaction solutions of the respective drugs.

### (Example 6)

In Example 6, the first photosensitive resin and the second photosensitive resin described in Table 3 were used for a floor layer and a barrier layer. An acrylic resin was used for an upper covering layer.

Fig. 8A is a flowchart illustrating a manufacturing method according to Example 6. Example 6 includes a step (step S103f) of leaving the floor layer to rest under a siloxane atmosphere. In addition, to bond the upper covering layer (step S14f), heating conditions by a hot plate were set to 50°C and 10 min. Except for them, a microfluidic chip was fabricated under the conditions similar to those of Example 1.

In step 103f, after PDMS was heated to 200°C in a heating furnace and left to rest for 5 min, a substrate on which the floor layer was formed was left to rest in the heating furnace for 10 min.

Fig. 8B is a cross-sectional view of a microfluidic chip manufactured in Example 6 corresponding to the cross-sectional view taken along A-A in Fig. 1B. In addition, Fig. 8C is a cross-sectional view of the microfluidic chip manufactured in Example 6 corresponding to the cross-sectional view taken along C-C in Fig. 1D. It is to be noted that a cross-sectional view corresponding to the B-B cross-sectional view of Fig. 1C has a configuration similar to the configuration of Fig. 8B and will be thus omitted.

A floor layer 11f was formed on a surface of a substrate 10f. A barrier layer 12f defines the channel section 3. An upper covering layer 13f is bonded to the barrier layer 12f to surround the channel section 3. Additionally, it was confirmed by GC/MS analysis (gas chromatography-mass spectrometry) that a siloxane polymer containing layer 14f was formed on a surface of the floor layer 11f. The contact angle θ3 of the 12f floor layer 11f was 100°, the contact angle θ3 of the barrier layer 12f was 70°, and the contact angle θ3 of the upper covering layer 13f was 40°.

Additionally, it was confirmed by GC/MS analysis that the siloxane polymer containing layer 14f formed on the floor layer 11f contained siloxane polymers D3 to D20 (see Table 6 described below).

In addition, Fig. 8C illustrates evaluation of a reaction between the drugs 15 and the test liquid 16. In Fig. 8C, the drugs 15 are supplied from the outlet 4 in advance. The test liquid is injected from the inlet 2 and the test liquid is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to carry out evaluation of a reaction of a test liquid and two types of drugs without contamination between the reaction solutions of the respective drugs.

### (Example 7)

In Example 7, the first photosensitive resin and the second photosensitive resin described in Table 2 were used for a floor layer and a barrier layer. An acrylic resin was used for an upper covering layer.

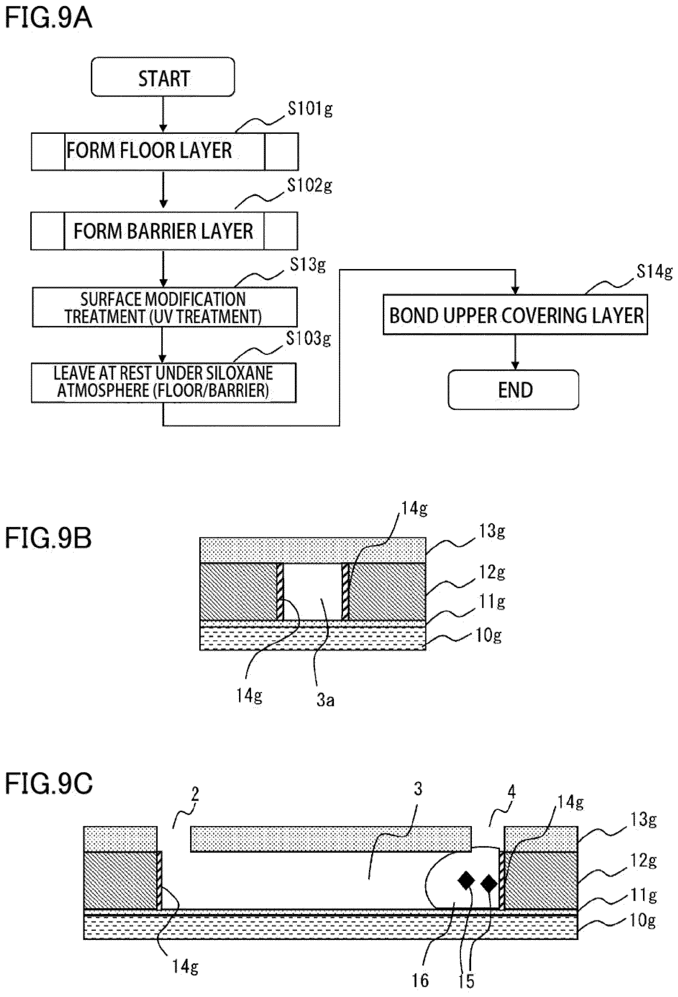

Fig. 9A is a flowchart illustrating a manufacturing method according to Example 7. Example 7 includes a step (step S103g) of leaving the floor layer and the barrier layer to rest under a siloxane atmosphere. In addition, to bond the upper covering layer (step S14g), heating conditions by a hot plate were set to 50°C and 10 min. Except for them, a microfluidic chip was fabricated under the conditions similar to those of Example 1.

In step 103g, after PDMS was heated to 200°C in a heating furnace and left to rest for 5 min, a substrate above which the floor layer and the barrier layer were formed was left to rest in the heating furnace for 10 min.

Fig. 9B is a cross-sectional view of a microfluidic chip manufactured in Example 7 corresponding to the cross-sectional view taken along A-A in Fig. 1B. In addition, Fig. 9B is a cross-sectional view of the microfluidic chip manufactured in Example 7 corresponding to the cross-sectional view taken along C-C in Fig. 1D. It is to be noted that a cross-sectional view corresponding to the B-B cross-sectional view of Fig. 1C has a configuration similar to the configuration of Fig. 9B and will be thus omitted.

A floor layer 11g was formed on a surface of a substrate 10g. A barrier layer 12g defines the channel section 3. An upper covering layer 13g is bonded to the barrier layer 12g to surround the channel section 3. Additionally, it was confirmed by GC/MS analysis (gas chromatography-mass spectrometry) that a siloxane polymer containing layer 14g was formed on a surface of the barrier layer 12g. The contact angle θ3 of the floor layer 11g was 60°, the contact angle θ3 of the barrier layer 12g was 90°, and the contact angle θ3 of the upper covering layer 13g was 40°.

Additionally, it was confirmed by GC/MS analysis that the siloxane polymer containing layer 14g formed on the barrier layer 12g contained siloxane polymers D3 to D20 (see Table 6 described below).

In addition, Fig. 9C illustrates evaluation of a reaction between the drugs 15 and the test liquid 16. In Fig. 8C, the drugs 15 are supplied from the outlet 4 in advance. The test liquid is injected from the inlet 2 and the test liquid is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to carry out evaluation of a reaction of a test liquid and two types of drugs without contamination between the reaction solutions of the respective drugs.

### (Example 8)

In Example 8, the first photosensitive resin and the second photosensitive resin described in Table 4 were used for a floor layer and a barrier layer. An acrylic resin was used for an upper covering layer.

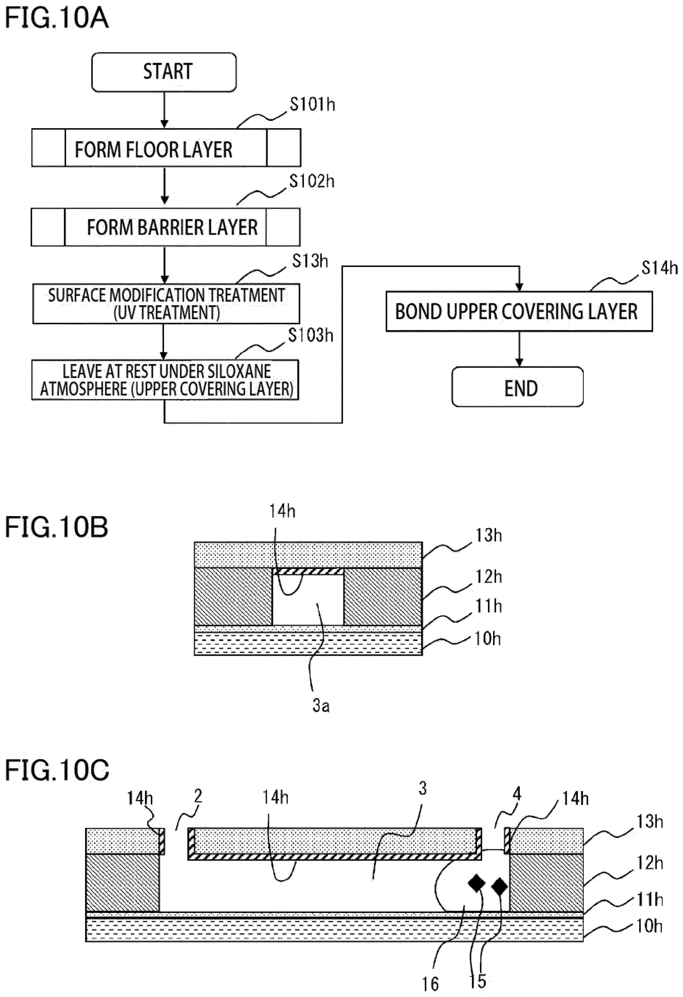

Fig. 10A is a flowchart illustrating a manufacturing method according to Example 8. Example 8 includes a step (step S103h) of leaving the upper covering layer to rest under a siloxane atmosphere. In addition, to bond the upper covering layer (step S14h), heating conditions by a hot plate were set to 80°C and 10 min. Except for them, a microfluidic chip was fabricated under the conditions similar to those of Example 1.

In step 103h, after PDMS was heated to 200°C in a heating furnace and left to rest for 5 min, the upper covering layer was left to rest in the heating furnace for 10 min.

Fig. 10B is a cross-sectional view of a microfluidic chip manufactured in Example 8 corresponding to the A-A cross-sectional view taken along in Fig. 1B. In addition, Fig. 10C is a cross-sectional view of the microfluidic chip manufactured in Example 8 corresponding to the cross-sectional view taken along C-C in Fig. 1D. It is to be noted that a cross-sectional view corresponding to the B-B cross-sectional view of Fig. 1C has a configuration similar to the configuration of Fig. 10B and will be thus omitted.

A floor layer 11h was formed on a surface of a substrate 10h. A barrier layer 12h defines the channel section 3. An upper covering layer 13h is bonded to the barrier layer 12h to surround the channel section 3. Additionally, it was confirmed by GC/MS analysis (gas chromatography-mass spectrometry) that a siloxane polymer containing layer 14h was formed on a surface of the upper covering layer 13h. The contact angle θ3 of the floor layer 11h was 60°, the contact angle θ3 of the barrier layer 12h was 70°, and the contact angle θ3 of the upper covering layer 13h was 90°.

Additionally, it was confirmed by GC/MS analysis that the siloxane polymer containing layer 14h formed on the upper covering layer 13h contained siloxane polymers D3 to D20 (see Table 6 described below).

In addition, Fig. 10C illustrates evaluation of a reaction between the drugs 15 and the test liquid 16. In Fig. 8C, the drugs 15 are supplied from the outlet 4 in advance. The test liquid is injected from the inlet 2 and the test liquid is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.
As described above, it was possible to carry out a reaction assessment of a test liquid and two types of drugs without contamination between the reaction solutions of the respective drugs.

### (Example 9)

In Example 9, the first photosensitive resin and the second photosensitive resin described in Table 4 were used for a floor layer and a barrier layer. Glass was used for an upper covering layer.

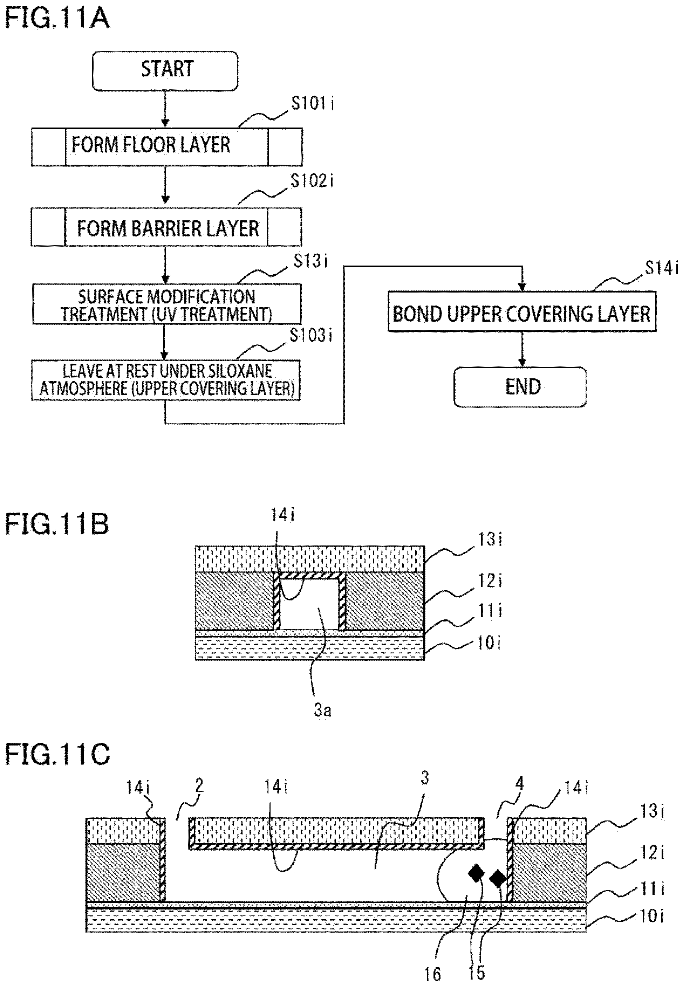

Fig. 11A is a flowchart illustrating a manufacturing method according to Example 9. Example 9 includes a step (step S103i) of leaving the upper covering layer to rest under a siloxane atmosphere. In addition, to bond the upper covering layer (step S14i), heating conditions by a hot plate were set to 120°C and 10 min. Except for them, a microfluidic chip was fabricated under the conditions similar to those of Example 1.

In step 103i, after PDMS was heated to 200°C in a heating furnace and left to rest for 5 min, the upper covering layer was left to rest in the heating furnace for 10 min.

Fig. 11B is a cross-sectional view of a microfluidic chip manufactured in Example 9 corresponding to the cross-sectional view taken along A-A in Fig. 1B. In addition, Fig. 11C is a cross-sectional view of the microfluidic chip manufactured in Example 9 corresponding to the cross-sectional view taken along C-C in Fig. 1D. It is to be noted that a cross-sectional view corresponding to the B-B cross-sectional view of Fig. 1C has a configuration similar to the configuration of Fig. 11B and will be thus omitted.

A floor layer 11i was formed on a surface of a substrate 10i. A barrier layer 12i defines the channel section 3. An upper covering layer 13i is bonded to the barrier layer 12i to surround the channel section 3. Additionally, it was confirmed by GC/MS analysis (gas chromatography-mass spectrometry) that a siloxane polymer containing layer 14i was formed on surfaces of the barrier layer 12i and the upper covering layer 13i. The contact angle θ3 of the floor layer 11i was 60°, the contact angle θ3 of the barrier layer 12i was 70°, and the contact angle θ3 of the upper covering layer 13i was 100°.

Additionally, it was confirmed by GC/MS analysis that the siloxane polymer containing layer 14i formed on the upper covering layer 13i contained siloxane polymers D3 to D20 (see Table 6 described below).

In addition, Fig. 11C illustrates evaluation of a reaction between the drugs 15 and the test liquid 16. In Fig. 11C, the drugs 15 are supplied from the outlet 4 in advance. The test liquid is injected from the inlet 2 and the test liquid is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and observation showed that the droplet remained near the outlet and the droplet did not flow back to the branching section 18 of the channel.

As described above, it was possible to evaluate reaction of a test liquid and two types of drugs without contamination between the reaction solutions of the respective drugs.

### (Comparative Example 1)

In a comparative example 1, the first photosensitive resin and the second photosensitive resin described in Table 4 were used for a floor layer and a barrier layer. An acrylic resin was used for an upper covering layer.

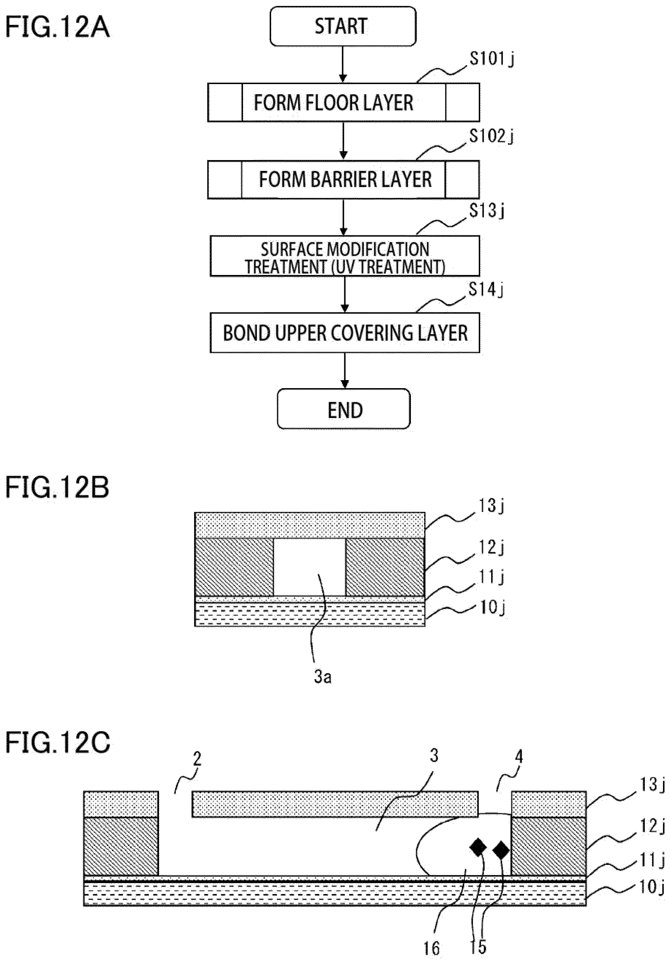

Fig. 12A is a flowchart illustrating a manufacturing method according to the comparative example 1. To bond the upper covering layer (step S14j), heating conditions by a hot plate were set to 80°C and 10 min in the comparative example 1. Except for them, a microfluidic chip was fabricated under the conditions similar to those of Example 1. The manufacturing method illustrated in Fig. 12A includes steps similar to those of the manufacturing method illustrated in Fig. 2.

Fig. 12B is a cross-sectional view of a microfluidic chip manufactured in the comparative example 1 corresponding to the cross-sectional view taken along A-A in Fig. 1B. In addition, Fig. 12C is a cross-sectional view of the microfluidic chip manufactured in the comparative example 1 corresponding to the cross-sectional view taken along C-C in Fig. 1D. It is to be noted that a cross-sectional view corresponding to the B-B cross-sectional view of Fig. 1C has a configuration similar to the configuration of Fig. 12B and will be thus omitted.

A floor layer 11j was formed on a surface of a substrate 10j. A barrier layer 12j defines the channel section 3. An upper covering layer 13j is bonded to the barrier layer 12j to surround the channel section 3. Additionally, according to a GC/MS analysis (gas chromatography-mass spectrometry), a siloxane polymer containing layer 14j was not formed on surfaces of any of the floor layer 11j, the barrier layer 12j, and the upper covering layer 13j. The contact angle θ3 of the floor layer 11j was 60°, the contact angle θ3 of the barrier layer 12j was 70°, and the contact angle θ3 of the upper covering layer 13j was 40°.

In addition, Fig. 12C illustrates evaluation of a reaction between the drugs 15 and the test liquid 16. In Fig. 8C, the drugs 15 are supplied from the outlet 4 in advance. The test liquid is injected from the inlet 2 and the test liquid is pushed to the region near the outlet by air.

After this state, to promote a reaction between the drugs 15 and the test liquid 16, the microfluidic chip was placed in an incubator having a temperature of 50°C and a humidity of 80% and left for one hour. The microfluidic chip was taken out one hour later and it was confirmed by an observation that the droplet flowed back to the inlet and the reaction solutions of respective drugs were contaminated.

### <Assessment Results>

Table 5 illustrates manufacturing conditions and assessment results of Example 1 to the comparative example 1. Table 5 illustrates the compositions/components of the materials of the floor layer, the barrier layer, and the upper covering layer, the targets each left to rest under a siloxane gas atmosphere in the manufacturing step and the bonding conditions of the covering members, the contact angles (the contact angles θ3 after the upper covering layers are bonded), the detected polymers, the detection polymers, and the assessment results. The assessment methods have been described in respective Examples and the respective comparative examples. Contamination between reaction solutions branching in each of the microfluidic chips was assessed in the two levels of "Good" and "Poor" in accordance with the following assessment criterion on the basis of results of observations.

### <Assessment Criterion>

Good: A reaction solution remaining near the outlet 4 does not flow back to the branching section 18 of the channel, resulting in no contamination between reaction solutions
Poor: A reaction solution remaining near the outlet 4 flows back to the branching section 18 of the channel, resulting in contamination between reaction solutions

**[Table 5]**

| | Composition/components of material | | |
|---|---|---|---|
| | Flooring | Barrier | Covering member |
| Example 1 | Polysiloxane/acrylic monomer | PDMS | PDMS |
| Example 2 | Polysiloxane/acrylic monomer | Polysiloxane/acrylic monomer | PDMS |
| Example 3 | Polysiloxane/acrylic monomer | Polysiloxane/acrylic monomer | Acrylic resin |
| Example 4 | Acrylic resin/epoxy resin | Polysiloxane/acrylic monomer | PDMS |
| Example 5 | Polysiloxane/acrylic monomer | Acrylic resin/acrylic monomer | PDMS |
| Example 6 | Polysiloxane/acrylic monomer | Acrylic resin/acrylic monomer | Acrylic resin |
| Example 7 | Acrylic resin/epoxy resin | Polysiloxane/acrylic monomer | Acrylic resin |
| Example 8 | Acrylic resin/epoxy resin | Acrylic resin/acrylic monomer | Acrylic resin |
| Example 9 | Acrylic resin/epoxy resin | Acrylic resin/acrylic monomer | Glass |
| Comparative example 1 | Acrylic resin/epoxy resin | Acrylic resin/acrylic monomer | Acrylic resin |

| | | Manufacturing step | | | |
|---|---|---|---|---|---|
| | | Siloxane atmosphere (PDMS heated at 200°C for 5 min) | | Bonding conditions of covering member | |
| | | Target left to rest | Time for leaving to rest | | |
| Example 1 | | - | - | 200°C - 10 min | |
| Example 2 | | - | - | 200°C - 10 min | |
| Example 3 | | Floor and barrier | 10 min | 200°C - 10 min | |
| Example 4 | | - | - | 200°C - 10 min | |
| Example 5 | | - | - | 200°C - 10 min | |
| Example 6 | | Floor | 10 min | 50°C - 10 min | |
| Example 7 | | Floor and barrier | 10 min | 50°C - 10 min | |
| Example 8 | | Covering member | 10 min | 80°C - 10 min | |
| Example 9 | | Covering member | 10 min | 120°C - 10 min | |
| Comparative example 1 | | - | - | 80°C - 10 min | |

| | Contact angle 03[°] after bonding covering member ((*) ... In presence of hydrophobic layer) | | | Detection polymer (GC/MS) | Assessment result |
|---|---|---|---|---|---|
| | Floor | Barrier | Covering member | | |
| Example 1 | 90 (*) | 90 (*) | 90 (*) | D3 to D20 | Good |
| Example 2 | 100 (*) | 90 (*) | 130 (*) | D3 to D20 | Good |
| Example 3 | 100 (*) | 90 (*) | 40 | D3 to D20 | Good |
| Example 4 | 60 | 90 (*) | 100 (*) | D3 to D20 | Good |
| Example 5 | 100 (*) | 70 | 110 (*) | D3 to D20 | Good |
| Example 6 | 100 (*) | 70 | 40 | D3 to D20 | Good |
| Example 7 | 60 | 90 (*) | 40 | D3 to D20 | Good |
| Example 8 | 60 | 70 | 90 (*) | D3 to D20 | Good |
| Example 9 | 60 | 70 | 100 (*) | D3 to D20 | Good |
| Comparative example 1 | 60 | 70 | 40 | - | Poor |

Table 6 illustrates the relationships between the types of siloxane polymers included in the siloxane polymer containing layers 14 and the conditions for heating. The heating conditions each indicate the temperature and time for bonding a covering member or leaving the covering member to rest in a heating furnace under a siloxane atmosphere. Here, an n-meric low-molecular weight siloxane polymer is abbreviated as Dn.

**[Table 6]**

| Unit: ppm (w/w) | | | | |
|---|---|---|---|---|
| | | Heating conditions | | |
| Component name | Sample name | 100°C × 10 min | 150°C × 10 min | 200°C × 10 min |
| Cyclic siloxane trimer | D3 | < 1.0 | 2.6 | 4.6 |
| Cyclic siloxane tetramer | D4 | 39 | 50 | 44 |
| Cyclic siloxane pentamer | D5 | 120 | 150 | 220 |
| Cyclic siloxane hexamer | D6 | 120 | 200 | 300 |
| Cyclic siloxane heptamer | D7 | 110 | 180 | 270 |
| Cyclic siloxane octamer | D8 | 81 | 160 | 210 |
| Cyclic siloxane nonamer | D9 | 22 | 170 | 160 |
| Cyclic siloxane decamer | D10 | 1.4 | 130 | 180 |
| Cyclic siloxane undecamer | D11 | < 1.0 | 120 | 160 |
| Cyclic siloxane dodecamer | D12 | < 1.0 | 70 | 170 |
| Cyclic siloxane tridecamer | D13 | < 1.0 | 10 | 130 |
| Cyclic siloxane tetradecamer | D14 | < 1.0 | < 1.0 | 180 |
| Cyclic siloxane pentadecamer | D15 | < 1.0 | < 1.0 | 210 |
| Cyclic siloxane hexadecamer | D16 | < 1.0 | < 1.0 | 180 |
| Cyclic siloxane heptadecamer | D17 | < 1.0 | < 1.0 | 120 |
| Cyclic siloxane octadecamer | D18 | < 1.0 | < 1.0 | 46 |
| Cyclic siloxane nonadecamer | D19 | < 1.0 | < 1.0 | 10 |
| Cyclic siloxane eicosamer | D20 | < 1.0 | < 1.0 | 1.9 |

In this way, in a case where a siloxane polymer containing layer (hydrophobic region) having a contact angle of 90 degrees or more and 130 degrees or less was formed on a surface of any of the components of each of the microfluidic chips, it was possible to prevent a backflow of a reaction solution in the microfluidic chip and prevent contamination between reaction solutions.

### [Second Embodiment]

### <Basic Configuration of Microfluidic Chip>

A second embodiment is fundamentally different from the first embodiment in that two types of regions having hydrophobicity and hydrophilicity are formed on a floor layer of a microfluidic chip. The following chiefly describes a configuration different from that of the first embodiment and simplifies or omits the description of configuration similar to that of the first embodiment.

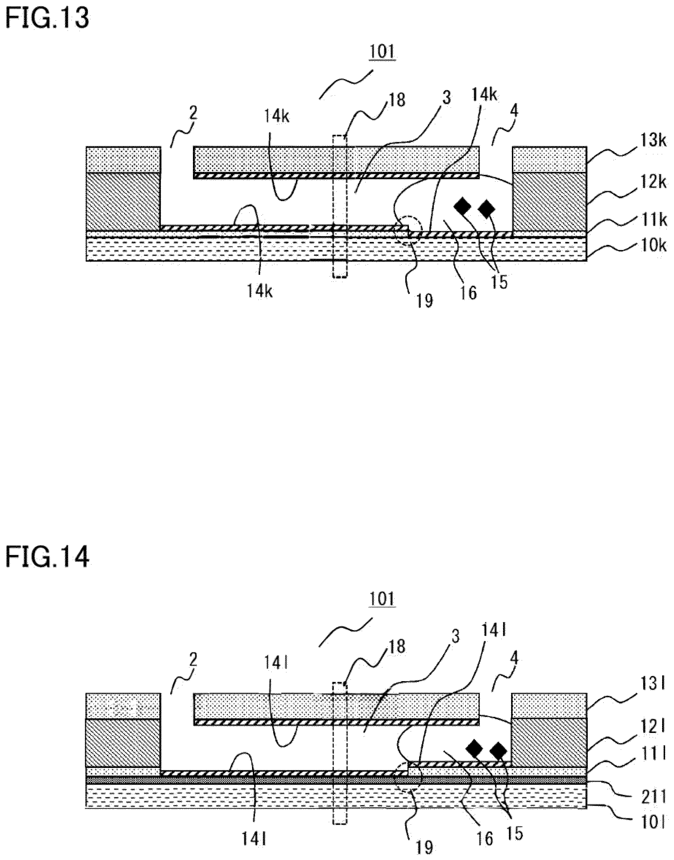

Fig. 13 is a cross-sectional view of a microfluidic chip 101 according to the second embodiment corresponding to the C-C cross-sectional view in Fig. 1D. In the microfluidic chip 101, a floor layer 11k is formed on a substrate 10k from the input section 2 to branching section 18. Further, a configuration is adopted in which the floor layer 11k is provided up to a middle section 19 located from the branching section 18 to the output section 4, but the floor layer 11k is not provided from the middle section 19 to the output section 4 and the substrate 10k is exposed. As illustrated in Fig. 13, a siloxane polymer containing layer 14k is formed on both an upper covering layer 13k and the floor layer 11k, but the region in which the substrate 10k is exposed exhibits hydrophilicity. Meanwhile, the region in which the floor layer 11k is formed exhibits hydrophobicity.

In this way, the microfluidic chip 101 according to the second embodiment is characterized in that the floor layer 11k on the substrate 10k is patterned to provide a hydrophilic region different from a hydrophobic region in the region near the output section 4.

### [Modification Example of Second Embodiment]

Fig. 14 is a cross-sectional view of the microfluidic chip 101 according to a modification example of the second embodiment corresponding to the C-C cross-sectional view in Fig. 1D. The microfluidic chip 101 is different from that of the second embodiment in that a floor layer 111 is not provided from the input section 2 to the branching section 18 and up to the middle section 19 located from the branching section 18 to the output section 4 and a substrate 101 is exposed, and the floor layer 111 is provided from the middle section 19 to the output section 4. As illustrated in Fig. 14, a siloxane polymer containing layer 141 is formed on both an upper covering layer 131 and the floor layer 111, but the region in which the floor layer 111 is formed exhibits hydrophilicity. Meanwhile, the region in which the substrate 101 is exposed exhibits hydrophobicity. As described below, a silicon coat 211 is applied to the substrate 101. In this way, the microfluidic chip 101 according to the modification example of the second embodiment is characterized in that the floor layer 111 on the substrate 101 coated with the silicon coat 211 is patterned to provide a hydrophilic region different from a hydrophobic region in the region near the output section 4.

### <Manufacturing Method>

The method for manufacturing the microfluidic chip 101 according to the second embodiment or the modification example is similar to the manufacturing method according to the first embodiment, but different in that a pattern corresponding to the different types of regions of a hydrophobic region and a hydrophilic region is formed when the floor layer is formed (step 101). The following description refers to a step corresponding to that of the manufacturing method according to the first embodiment when needed and uses the same reference signs for steps similar to those of the first embodiment to simplify or omit description.

### [Examples of Second Embodiment or Modification Example]

The microfluidic chip according to the second embodiment or the modification example will be described with reference to specific Examples. It is to be noted that the present invention is not limited to Examples below.

A first photosensitive resin used as a floor layer and a second photosensitive resin used as a barrier layer in each of Examples will be described. The first photosensitive resin in Table 7 includes polysiloxane and an acrylic monomer and the contact angle θ1 is 100°. The first photosensitive resin in Table 8 includes a silane coupling agent and an acrylic monomer and the contact angle θ1 is 60°. The first photosensitive resin in Table 9 includes an acrylic monomer and an acrylic monomer and the contact angle θ1 is 100°. The first photosensitive resin in Table 10 includes an acrylic resin and an epoxy resin and the contact angle θ1 is 60°.

The second photosensitive resin is illustrated in Table 11, the second photosensitive resin includes an acrylic resin and an acrylic monomer, and the contact angle θ1 is 70°.

**[Table 7]**

| | First photosensitive resin |
|---|---|
| | Floor |
| Material characteristics | Negative |
| | Liquid |
| Composition/components | Polysiloxane |
| | Acrylic monomer |
| Contact angle | 100° |
| Coat rotation speed | 1100 rpm/10 sec |
| Pre-bake | 90°C/90 sec |
| Exposure | 100 mj/cm² |
| Development liquid | Sodium carbonate |
| Development time | 180 sec |
| Washing with water | 60 sec |
| Post-bake | 230°C/30 min |
| Floor A | |

**[Table 8]**

| | First photosensitive resin |
|---|---|
| | Floor |
| Material characteristics | Negative |
| | Liquid |
| Composition/components | Silane coupling material |
| | Acrylic monomer |
| Contact angle | 60° |
| Coat rotation speed | 700 rpm/10 sec |
| Pre-bake | 90°C/60 sec |
| Exposure | 70 mj/cm² |
| Development liquid | Sodium carbonate |
| Development time | 90 sec |
| Washing with water | 60 sec |
| Post-bake | 230°C/30 min |
| Floor B | |

**[Table 9]**

| | First photosensitive resin |
|---|---|
| | Floor |
| Material characteristics | Negative |
| | Liquid |
| Composition/components | Acrylic monomer |
| | Acrylic monomer |
| Contact angle | 100° |
| Coat rotation speed | 900 rpm/10 sec |
| Pre-bake | 90°C/100 sec |
| Exposure | 100 mj/cm² |
| Development liquid | Sodium carbonate |
| Development time | 180 sec |
| Washing with water | 60 sec |
| Post-bake | 230°C/30 min |
| Floor C | |

**[Table 10]**

| | First photosensitive resin |
|---|---|
| | Floor |
| Material characteristics | Negative |
| | Liquid |
| Composition/components | Acrylic resin |
| | Epoxy resin |
| Contact angle | 60° |
| Coat rotation speed | 700 rpm/10 sec |
| Pre-bake | 90°C/60 sec |
| Exposure | 70 mj/cm² |
| Development liquid | Sodium carbonate |
| Development time | 90 sec |
| Washing with water | 60 sec |
| Post-bake | 230°C/30 min |

**[Table 11]**

| | Second photosensitive resin |
|---|---|
| | Barrier layer |
| Material characteristics | Negative |
| | Liquid |
| Composition/components | Acrylic resin |
| | Acrylic monomer |
| Contact angle | 70° |
| Coat rotation speed | 500 rpm/10 sec |
| Pre-bake | 130°C/180 sec |

| Exposure | 60 mj/cm² |
|---|---|
| Development liquid | Sodium carbonate |
| Development time | 180 sec |
| Washing with water | 60 sec |
| Post-bake | 230°C/30 min |

### (Example 10)

In Example 10 of the second embodiment, the first photosensitive resin in Table 7 was used for the floor layer and the second photosensitive resin in Table 11 was used for the barrier layer. A microfluidic chip was fabricated by using PDMS for the upper covering layer.

First, a glass substrate was coated with the first photosensitive resin that was transparent to form the floor layer (step S1). The glass substrate was coated with the first photosensitive resin by using a spin coater at a rotation speed of 1100 rpm for 30 seconds. The rotation speed and the time were adjusted to produce a film thickness of 2 µm. Next, heating treatment (pre-bake) (step S2) was conducted on a hot plate for the purpose of removing residual solvent medium included in the photosensitive resin. Pre-baking was carried out at a temperature of 90°C for 90 seconds.

Next, the photosensitive resin layer on the glass substrate was exposed (step S3). Specifically, the photosensitive resin was exposed to have a pattern through a photomask having a pattern for providing a hydrophobic region and a hydrophilic region in the microfluidic channel. A photomask having a two-layer structure of chromium and chromium oxide as a light-shielding film was used as the photomask. A proximity exposure apparatus was used for the exposure. The exposure apparatus included a high-pressure mercury lamp as a light source and had a broadband including the g-line, the h-line, and the i-line as the exposure wavelengths. The exposure value was 100 mJ/cm2.

Next, the exposed photosensitive resin layer was developed to form a pattern (step S4). Specifically, the photosensitive resin layer was developed for 180 seconds using a sodium carbonate development liquid to dissolve unexposed portions for patterning.

Subsequently, the photosensitive resin layer on the substrate showered off the development liquid with ultrapure water and was dried in a spin dryer (step S5).

Next, heating treatment (post-bake) was conducted in an oven at 230°C for 30 minutes (step S6). This formed the pattern of the floor layer corresponding a hydrophobic region and a hydrophilic region on the substrate.

Next, the substrate and the floor layer were coated with the second photosensitive resin that was transparent to form the barrier layer. First, the glass substrate and the floor layer were coated with the second photosensitive resin using a spin coater at a rotation speed of 500 rpm for ten seconds (step S7). The rotation speed and the time were adjusted to produce a film thickness of 50 µm. Next, heating treatment (pre-bake) (step S8) was conducted on a hot plate for the purpose of removing residual solvent medium included in the photosensitive resin. Pre-baking was carried out at a temperature of 130°C for 180 seconds.

Next, the photosensitive resin layer above the glass substrate and the floor layer was exposed (step S9). Specifically, the photosensitive resin was exposed to have a pattern through a photomask having a channel pattern. A photomask having a two-layer structure of chromium and chromium oxide as a light-shielding film was used as the photomask. A proximity exposure apparatus was used for the exposure. The exposure apparatus included a high-pressure mercury lamp as a light source and had a broadband including the g-line, the h-line, and the i-line as the exposure wavelengths. The exposure value was 60 mJ/cm2.

Next, the exposed photosensitive resin layer was developed to form a channel pattern (step S10). Specifically, the photosensitive resin layer was developed for 180 seconds using a sodium carbonate development liquid to dissolve unexposed portions for patterning.

Subsequently, the photosensitive resin layer on the substrate showered off the development liquid with ultrapure water and was dried in a spin dryer (step S11).

Next, heating treatment (post-bake) was conducted in an oven at 230°C for 30 minutes (step S12). This formed a channel section (channel pattern) determined by the barrier layer on the substrate. The minimum width of the opposed barrier layer, that is, the minimum width of the channel was 50 µm.

After the channel pattern was formed, the covering member was bonded to fabricate the microfluidic chip. PDMS was used for the covering member. The bonding surfaces of the barrier layer having the channel pattern and the PDMS were both irradiated with UV light (step S13) before bonding. The amount of UV irradiation was set to 1000 mJ/cm2. After that, the covering member was heated on a hot plate at 200°C for 10 min with the bonding surfaces bonded together, thereby bonding the covering member (step S14). This produced the microfluidic chip 101.

It was confirmed by GC/MS analysis that a siloxane polymer containing layer which contained low-molecular weight siloxanes D3 to D20 was formed on both a surface of the floor and a surface of the covering member at this time.

In addition, a contact angle inside the channel 3 in the microfluidic chip 101 according to Example 10 was measured by using a micro-titration contact angle meter DSM 100M (manufactured by KRUSS). It was confirmed that the contact angle θ3 of the region (hydrophobic region) illustrated in Fig. 13 in which the floor layer 11k was formed was 110°, the contact θ3 angle of the glass substrate region (hydrophilic region) in which the floor layer 11k was not formed was 70°, and the two types of regions of the hydrophobic region and the hydrophilic region having different contact angles were formed. It is to be noted that the contact angle of the barrier layer was 70° and the contact angle of the covering member was 110°.

It is to be noted that the initial contact angle θ1 of the floor layer 11k was 100° and the initial contact angle θ1 of the glass substrate was 20° at the time point when the floor layer 11k was formed, and the contact angle θ2 of the floor layer 11k was 60° and the contact angle θ2 of the glass substrate was 5° after a surface modification.

### (Example 11)

In Example 11 of the second embodiment, the first photosensitive resin in Table 7 was used for the floor layer and the second photosensitive resin in Table 11 was used for the barrier layer. A microfluidic chip was fabricated by using PDMS for the upper covering layer.

To bond the upper covering layer (step S14), heating conditions by a hot plate were set to 150°C and 5 min in Example 11. Except for them, a microfluidic chip was fabricated under the conditions similar to those of Example 10.

It was confirmed by GC/MS analysis that a siloxane polymer containing layer which contained low-molecular weight siloxanes D3 to D20 was formed on both a surface of the floor and a surface of the covering member at this time. In addition, the contact angle θ3 of the region (hydrophobic region) in which the floor layer 11k in Fig. 13 was formed was 100° and the contact angle θ3 of the glass substrate region (hydrophilic region) in which the floor layer 11k was not formed was 20°.

It is to be noted that the initial contact angle θ1 of the floor layer 11k was 100° and the initial contact angle θ1 of the glass substrate was 20° at the time point when the floor layer 11k was formed, and the contact angle θ2 of the floor layer 11k was 60° and the contact angle θ2 of the glass substrate region was 5° after a surface modification.

### (Example 12)

In Example 12 of the second embodiment, the first photosensitive resin in Table 8 was used for the floor layer and the second photosensitive resin in Table 11 was used for the barrier layer. PDMS was used for an upper covering layer. Except for them, a microfluidic chip was fabricated under the conditions similar to those of Example 10.

It was confirmed by GC/MS analysis that a siloxane polymer containing layer which contained low-molecular weight siloxanes D3 to D20 was formed on both a surface of the floor and a surface of the covering member at this time. In addition, the contact angle θ3 of the region (hydrophobic region) in which the floor layer 11k in Fig. 13 was formed was 95° and the contact angle θ3 of the glass substrate region (hydrophilic region) in which the floor layer 11k was not formed was 70°.

It is to be noted that the initial contact angle θ1 of the region of the floor layer 11k was 60° and the initial contact angle θ1 of the glass substrate region was 20° at the time point when the floor layer was formed, and the contact angle θ2 of the region of the floor layer 11k was 25° and the contact angle θ2 of the glass substrate region was 5° after a surface modification.

### (Example 13)

In Example 13 according to the modification example of the second embodiment, the first photosensitive resin in Table 8 was used for the floor layer and the second photosensitive resin in Table 11 was used for the barrier layer. PDMS was used for an upper covering layer.

A glass substrate having a surface coated with the silicon coat 211 was used for the glass substrate 101. In addition, in a step of bonding the upper covering layer 131 (step S14), heating conditions by a hot plate were set to 100°C and 10 min. Except for them, a microfluidic chip was fabricated under the conditions similar to those of Example 10.

It was confirmed by GC/MS analysis that a siloxane polymer containing layer which contained low-molecular weight siloxanes D4 to D10 was formed on both a surface of the floor and a surface of the covering member at this time. In addition, the contact angle θ3 of the glass substrate region (hydrophobic region) in Fig. 14 coated with the silicon coat 211 in which the floor layer 111 was not formed was 90° and the contact angle θ3 of the region (hydrophilic region) in which the floor layer 111 was formed was 55°.

It is to be noted that the initial contact angle θ1 of the region of the floor layer 111 was 20° and the initial contact angle θ1 of the glass substrate region was 95° at the time point when the floor layer 111 was formed, and the contact angle θ2 of the region of the floor layer 111 was 25° and the contact angle θ2 of the glass substrate was 80° after a surface modification.

### (Example 14)

In Example 14 of the second embodiment, the first photosensitive resin in Table 7 was used for the floor layer and the second photosensitive resin in Table 11 was used for the barrier layer. A PMMA was used for an upper covering layer. The contact angle θ1 of the PMMA was 80°.

Example 14 includes a step of leaving the floor layer and the barrier layer to rest under a siloxane atmosphere. In addition, to bond the upper covering layer 13k (step S14), heating conditions by a hot plate were set to 40°C and 5 min. Bonding a PMMA under a high-temperature condition remarkably warped a substrate. A PMMA was thus bonded at low temperature within a short time. Except for them, a microfluidic chip was fabricated under the conditions similar to those of Example 10.

In the step of leaving the PDMS to rest under a siloxane atmosphere, the PDMS was left to rest in a heating furnace at 200°C for 10 min. A low-molecular weight siloxane atmosphere was formed in the heating furnace and the glass substrate having a channel pattern formed thereon was then exposed to the low-molecular weight siloxane atmosphere.

It was confirmed by GC/MS analysis that a siloxane polymer containing layer which contained low-molecular weight siloxanes D4 to D20 was formed on both a surface of the floor and a surface of the covering member at this time. In addition, the contact angle θ3 of the region (hydrophobic region) in which the floor layer 11k in Fig. 13 was formed was 110° and the contact angle θ3 of the glass substrate region (hydrophilic region) in which the floor layer 11k was not formed was 70°.

It is to be noted that the initial contact angle θ1 of the region of the floor layer 11k was 100° and the initial contact angle θ1 of the glass substrate was 20° at the time point when the floor layer 11k was formed, and the contact angle θ2 of the region of the floor layer 11k was 60° and the contact angle θ2 of the glass substrate was 5° after a surface modification.

### (Example 15)

In Example 15 according to the modification example of the second embodiment, the first photosensitive resin in Table 10 was used for the floor layer and the second photosensitive resin in Table 11 was used for the barrier layer. PDMS was used for an upper covering layer.

A glass substrate having a surface coated with the silicon coat 211 was used for the glass substrate 101. In addition, in a step of bonding an upper covering layer (step S14), heating conditions by a hot plate were set to 150°C and 5 min. Except for them, a microfluidic chip was fabricated under the conditions similar to those of Example 10.

The contact angle θ3 of the glass substrate region (hydrophobic region) in Fig. 14 coated with the silicon coat 211 in which the floor layer 111 was not formed was 95° and the contact angle θ3 of the region (hydrophilic region) in which the floor layer 111 was formed was 60°.

It is to be noted that the initial contact angle θ1 of the region of the floor layer 111 at the time point when the floor layer 111 was formed was 60°.

### (Comparative Example 2)

In a comparative example 2 of the second embodiment, the first photosensitive resin in Table 7 was used for the floor layer and the second photosensitive resin in Table 11 was used for the barrier layer. PDMS was used for an upper covering layer.

In a step of bonding an upper covering layer (step S14), heating conditions by a hot plate were set to 100°C and 10 min in the comparative example 2. Except for them, a microfluidic chip was fabricated under the conditions similar to those of Example 10.

It was confirmed by GC/MS analysis that a siloxane polymer containing layer which contained low-molecular weight siloxanes D4 to D10 was formed on both a surface of the floor and a surface of the covering member at this time. In addition, the contact angle θ3 of the region in which the floor layer was formed was 80° and the contact angle θ3 of the glass substrate region in which the floor layer was not formed was 55°.

Regarding the floor layer, the initial contact angle θ1 of the region of the floor layer was 100° and the initial contact angle θ1 of the glass substrate was 20° at the time when the floor layer was formed, and the contact angle θ2 of the region of the floor layer was 60° and the contact angle θ2 of the glass substrate was 5° after a surface modification.

### (Comparative Example 3)

In a comparative example 3 of the second embodiment, the first photosensitive resin in Table 8 was used for the floor layer and the second photosensitive resin in Table 11 was used for the barrier layer. PDMS was used for an upper covering layer.

In a step of bonding an upper covering layer (step S14, heating conditions by a hot plate were set to 100°C and 10 min in the comparative example 3. Except for them, a microfluidic chip was fabricated under the conditions similar to those of Example 12.

It was confirmed by GC/MS analysis that a siloxane polymer containing layer which contained low-molecular weight siloxanes D4 to D10 was formed on both a surface of the floor and a surface of the covering member at this time. In addition, the contact angle θ3 of the region in which the floor layer was formed was 70° and the contact angle θ3 of the glass substrate region in which the floor layer was not formed was 55°.

Regarding the floor layer 11k, the initial contact angle θ1 of the region of the floor layer 11k was 60° and the initial contact angle θ1 of the glass substrate was 20° at the time when the floor layer was formed, and the contact angle θ2 of the region of the floor layer 11k was 25° and the contact angle θ2 of the glass substrate was 5° after a surface modification.

### (Comparative Example 4)

In a comparative example 4 of the second embodiment, the first photosensitive resin in Table 7 was used for the floor layer and the second photosensitive resin in Table 11 was used for the barrier layer. Synthetic resin including PMMA was used for an upper covering layer.

The comparative example 4 includes a step of leaving the floor layer and the barrier layer to rest under a siloxane atmosphere. Except for them, a microfluidic chip was fabricated under conditions similar to those of Example 14.

In the step of leaving the PDMS to rest under a siloxane atmosphere, the PDMS was left to rest in a heating furnace at 100°C for 10 min. A low-molecular weight siloxane atmosphere was formed in the heating furnace and the glass substrate having a channel pattern formed thereon was then exposed to the low-molecular weight siloxane atmosphere.

It was confirmed by GC/MS analysis that a siloxane polymer containing layer which contained low-molecular weight siloxanes D4 to D10 was formed on both a surface of the floor and a surface of the covering member at this time. In addition, the contact angle θ3 of the region in which the floor layer was formed was 80° and the contact angle θ3 of the glass substrate region in which the floor layer was not formed was 55°.

Regarding the floor layer, the initial contact angle θ1 of the region of the floor layer was 100° and the initial contact angle θ1 of the glass substrate was 20° at the time point when the floor layer was formed, and the contact angle θ2 of the region of the floor layer was 60° and the contact angle θ2 of the glass substrate was 5° after a surface modification.

### <Assessment Results>

As in the assessment method performed in the first embodiment, drugs were supplied from the outlet 4 of the channel in advance in each of the microfluidic chips according to Examples 10 to 15 and the comparative examples 2 to 4. A test liquid was injected from the inlet 2. After the test liquid was pushed to the region near the outlet 4 by air, the microfluidic chip was put in an incubator having a temperature of 50°C and a humidity of 80% and left for one hour to promote reaction between the test liquid and the drugs. The microfluidic chip was taken out and observed one hour later. Table 12 illustrates manufacturing conditions and assessment results of Example 10 to the comparative example 4.

**[Table 12]**

| | Composition/components of material | | | |
|---|---|---|---|---|
| | Substrate | Floor | Barrier | Covering member |
| Example 10 | Glass | Polysiloxane/acrylic monomer | Acrylic resin/acrylic monomer | PDMS |
| Example 11 | Glass | Polysiloxane/acrylic monomer | Acrylic resin/acrylic monomer | PDMS |
| Example 12 | Glass | Silane coupling agent/acrylic monomer | Acrylic resin/acrylic monomer | PDMS |
| Example 13 | Glass/silicon coat | Silane coupling agent/acrylic monomer | Acrylic resin/acrylic monomer | PDMS |
| Example 14 | Glass | Polysiloxane/acrylic monomer | Acrylic resin/acrylic monomer | PMMA |
| Example 15 | Glass/silicon coat | Acrylic resin/epoxy resin | Acrylic resin/acrylic monomer | PDMS |
| Comparative example 2 | Glass | Polysiloxane/acrylic monomer | Acrylic resin/acrylic monomer | PDMS |
| Comparative example 3 | Glass | Silane coupling agent/acrylic monomer | Acrylic resin/acrylic monomer | PDMS |
| Comparative example 4 | Glass | Polysiloxane/acrylic monomer | Acrylic resin/acrylic monomer | PMMA |

As illustrated in Table 12, it was confirmed that the contact angle decreased after UV irradiation and the contact angle increased after the PDMS was formed by firing through the step of boding the upper covering layer because a low-molecular weight siloxane containing layer was formed on the surface.

The microfluidic chips according to Example 10 to Example 15 all had satisfactory ("Good") contamination results. That is, the reaction solution remained near the outlet and the reaction solution did not flow back to the branching section 18 of the channel in each of the microfluidic chips according to Example 10 to Example 15. This made it possible to carry out a reaction assessment of the test liquid and two types of drugs without contamination between the reaction solutions.

In contrast, the microfluidic chips according to the comparative example 2 to the comparative example 4 all had unsatisfactory ("Poor") contamination results. The reaction solution did not remain near the outlet and the reaction solution flowed back to the branching section 18 of the channel. Reaction solutions thus became contaminated and it was not possible to carry out a reaction assessment of the test liquid and two types of drugs.

Here, the comparative examples 2, 3, and 4 are respectively obtained by carrying out bonding conditions or heating conditions in heating furnaces at low temperature in Example 10, Example 12, and Example 14. The comparative example 2 to the comparative example 4 seemed to fail to offer effects of sufficient hydrophobization because only siloxanes having a lower level of polymerization volatilized. Higher temperature was thus considered more preferable as a firing condition of PDMS in the second embodiment.

### <Restraint on Backflow of Droplet>

In a microfluidic chip, the movement of a droplet in a channel is related to the balance of the Laplace pressure of a liquid interface in the channel. The surface energy of a solidus surface that is a section in contact with the surface of liquid, that is, the contact angle is one of important factors for the Laplace pressure. Therefore, it is possible to prevent a backflow by controlling the contact angle of the surface of the channel. To cause a fluid to smoothly flow, a material having a surface whose contact angle exhibits hydrophilicity is typically used. In addition, in a case where a droplet is retained in a predetermined place as in the present disclosure, a material having a surface whose contact angle exhibits hydrophobicity is used. As the relationship between a droplet and a surface of a solid body, surface tension does not act on a droplet so much with respect to a surface of a solid body that has hydrophilicity. That is, a droplet easily mixes with a hydrophilic surface. In contrast, surface tension easily acts on a droplet with respect to a surface of a solid body that has hydrophobicity. That is, a droplet does not easily mix with a hydrophobic surface. The use of these properties allows a droplet to remain on a hydrophilic surface. As a result of intensive studies, the inventors of the present application have found that it is possible to restrain backflow of a droplet by keeping the contact angle of a hydrophobic region at 90 degrees more and 130 degrees or less and the contact angle of a hydrophilic region at less than 90 degrees.

It is to be noted that the microfluidic chip and the method for manufacturing the microfluidic chip according to the present invention are not limited to the embodiments and Examples described above. It is possible to make a variety of modifications within a range that does not impair the features of the invention.

### Industrial Applicability

The present invention is favorably usable as a microfluidic chip and a method for manufacturing a microfluidic chip each of which makes it possible to prevent backflow of a reaction solution and prevent contamination between reaction solutions by providing a hydrophobic region and a hydrophilic region in a microfluidic chip for research use, diagnostic use, testing, analysis, incubation, or the like by using material included in a channel.

In addition, it is also possible to control a contact angle in a step such as UV irradiation or bonding that is typically performed to manufacture a microfluidic chip without providing a special step, offering even an effect of increasing the manufacturing efficiency.

### Reference Signs List

1, 101 ... Microfluidic chip
2 ... Input section
3 ... Channel section
3a ... Trunk channel section
3b, 3c ... Branch channel section
4, 5 ... Output section
10, 10a to 101 ... Substrate
11, 11a to 111 ... Floor layer
12, 12b to 121 ... Barrier layer
13, 13b to 131 ... Upper covering layer1213 ... Covering member also serving as barrier layer
14, 14a to 141 ... Siloxane polymer containing layer
15 ... Drug
16 ... Test liquid
18 ... Branching section
19 ... Middle section
211 ... Silicon coating
49 ... Test liquid
50 ... Drug

## Claims

1. A microfluidic chip comprising:
an input section from which a fluid is introduced;
a channel section in which the fluid flows; and
an output section from which the fluid is discharged or a drug fixation section (uniformly referred to as an "output section" below) where the fluid and a drug come into contact, the microfluidic chip being **characterized in that**
the channel section has a region (referred to as a "hydrophobic region" below) in which a contact angle of a surface in contact with the fluid is 90 degrees or more and 130 degrees or less.

2. The microfluidic chip according to claim 1, **characterized in that** a siloxane polymer containing layer is formed in the hydrophobic region.

3. The microfluidic chip according to claim 2, **characterized in that**
the channel section is formed by being surrounded by at least a floor layer, a barrier layer, and an upper covering layer above a substrate, and
a surface of at least one of the floor layer, the barrier layer, and the upper covering layer has the hydrophobic region.

4. The microfluidic chip according to claim 2, **characterized in that** the channel section has, near the hydrophobic region, a region (referred to as a "hydrophilic region" below) in which the contact angle of the surface in contact with the fluid is less than 90 degrees on a surface near the output section.

5. The microfluidic chip according to claim 2, **characterized in that** the channel section includes a trunk channel section leading to the input section and a plurality of branch channel sections branching from the trunk channel section to the output sections.

6. The microfluidic chip according to claim 2, wherein the siloxane polymer containing layer includes at least any of a trimer to an eicosamer of siloxane polymers.

7. The microfluidic chip according to claim 3, wherein the upper covering layer is formed by using PDMS.

8. The microfluidic chip according to claim 3, wherein the upper covering layer is formed by using any of PET, a PMMA, PC, a COP, and glass.

9. The microfluidic chip according to claim 3, wherein the floor layer and the barrier layer are each formed by using a photosensitive resin.

10. The microfluidic chip according to claim 9, wherein the photosensitive resin has photosensitivity to light having a wavelength of 190 nm to 400 nm.

11. A method for manufacturing a microfluidic chip, the method comprising:
a first step of forming a floor layer on a substrate;
a second step of forming a barrier layer above the substrate and the floor layer; and
a third step of bonding an upper covering layer to the barrier layer, the method being **characterized in that**
a hydrophobic region is formed on a surface of at least one of the floor layer, the barrier layer, and the upper covering layer.

12. The method for manufacturing the microfluidic chip according to claim 11, **characterized in that** a siloxane polymer containing layer is formed in the hydrophobic region.

13. The method for manufacturing the microfluidic chip according to claim 12, wherein
the upper covering layer is formed by using PDMS, and
the third step is a step of bonding the upper covering layer and the barrier layer together by heating.

14. The method for manufacturing the microfluidic chip according to claim 12, wherein
the floor layer is formed by using a first photosensitive resin,
the barrier layer is formed by using a second photosensitive resin,
the first photosensitive resin or the second photosensitive resin contains polysiloxane or a silane coupling agent, and
the third step is a step of bonding the upper covering layer and the barrier layer together by heating.

15. The method for manufacturing the microfluidic chip according to claim 12, further comprising a fourth step of leaving a surface of any of the substrate, the floor layer, the barrier layer, and the upper covering layer to rest under a low-molecular weight siloxane atmosphere before the third step.

16. The method for manufacturing the microfluidic chip according to claim 15, wherein the low-molecular weight siloxane atmosphere is formed in the fourth step by heating PDMS in a heating furnace at 100°C or more for 5 min or more.

17. The method for manufacturing the microfluidic chip according to claim 12, wherein
the floor layer is formed to have a pattern in the first step, and
the hydrophobic region is formed on any one of a surface of the substrate on which the floor layer is not formed and a surface of the floor layer and a hydrophilic region is formed on another surface.

18. The method for manufacturing the microfluidic chip according to claim 14, wherein the first photosensitive resin and the second photosensitive resin each have photosensitivity to light having a wavelength of 190 nm to 400 nm.
